# FASCICULE DE BREVET EUROPEEN

(11) **EP 3 645 207 B1**
(45) Date de publication et mention de la délivrance du brevet: **30.03.2022**
(21) Numéro de dépôt: 18732798.6
(22) Date de dépôt: 26.06.2018
(51) Int. Cl.: B23K 26/06, B23K 26/08, B23K 26/402, G02B 5/122, G02B 26/08, G02B 26/10, B23K 26/364, B23K 101/38, B23K 103/04, B23K 103/08, B23K 103/18, B23K 103/00

(54) **METHODE DE STRUCTURISATION D'UN SUBSTRAT, ENSEMBLE COMPRENANT UN SUBSTRAT ET UN DISPOSITIF DE STRUCTURATION DUDIT SUBSTRAT**
VERFAHREN ZUR STRUKTURIERUNG EINES SUBSTRATS, ANORDNUNG MIT EINEM SUBSTRAT UND VORRICHTUNG ZUR STRUKTURIERUNG DES SUBSTRATS
METHOD OF STRUCTURING A SUBSTRATE, ASSEMBLY COMPRISING A SUBSTRATE AND A DEVICE FOR STRUCTURING SAID SUBSTRATE

(30) Priorité: 27.06.2017 BE 201705455
(43) Date de publication de la demande: 06.05.2020
(73) Titulaire: Laser Engineering Applications, 4102 Seraing (BE)
(72) Inventeur: MARTIN, Paul-Etienne, 33000 Bordeaux (FR); HENROTTIN, Anne, 4990 Lierneux (BE); ESTIVAL, Sébastien, 33400 Talence (FR); KUPISIEWICZ, Axel, Stefan, M., 4122 Neupré (BE); RAMOS DE CAMPOS, Jose, 4031 Angleur (BE)
(74) Mandataire: Gevers Patents
(86) Numéro de dépôt international: PCT/EP2018/067126
(87) Numéro de publication internationale: WO 2019/002301

(56) Documents cités:
- WO-A1-2008/110613
- WO-A1-2017/029210
- CN-A- 103 056 519
- US-A- 2 758 502
- US-B1- 6 501 045
- A. ROESNER ET AL: "Laser Assisted Joining of Plastic Metal Hybrids", PHYSICS PROCEDIA, vol. 12, 1 janvier 2011 (2011-01-01), pages 370-377, XP028381666, ISSN: 1875-3892, DOI: 10.1016/J.PHPRO.2011.03.146 [extrait le 2011-04-17]

## Description

L'invention concerne une méthode de structuration d'un substrat. L'invention concerne aussi une méthode d'assemblage de deux matériaux différents, un ensemble comprenant un dispositif pour structurer un substrat et ledit substrat, un système d'assemblage de deux matériaux différents, et un substrat structuré selon la méthode de structuration du premier aspect de l'invention.

### Art antérieur

Il est connu de structurer un substrat afin d'en modifier les propriétés de surface et notamment dans le but de réaliser un assemblage avec un deuxième matériau. Une modification de surface consiste par exemple à augmenter la surface de contact entre un substrat et un deuxième matériau. L'augmentation de la surface de contact nécessite par exemple une structuration de la surface du substrat avec des moyens mécaniques, chimiques et ou optiques.

La structuration de la surface d'un substrat en vue de sa mise en contact avec un deuxième matériau est alors utilisée pour améliorer les performances mécaniques de l'assemblage.

Une limitation de l'augmentation de la surface de contact entre un substrat et un deuxième matériau sans ajout de matière intermédiaire est d'augmenter uniquement le nombre de liaisons interatomiques ou intermoléculaires. Dans le cas d'un substrat et d'un deuxième matériau formant des liaisons interatomiques ou intermoléculaires faibles, une augmentation de la surface de contact entre un substrat et un deuxième matériau ne permet pas en général d'obtenir un bon assemblage.

Le document CN-A-103056519 décrit un dispositif pour réaliser des trous dans une pièce à l'aide d'un laser. Le dispositif comprend un miroir à 45 degrés et des modules à bords doubles non-parallèles distribués verticalement.

Le document WO-A-2008110613 (point de départ de la présente invention) décrit un dispositif pour guider un rayon lumineux avec un élément de guidage de lumière entraîné de façon rotative ou oscillante avec au moins un groupe optique qui présente au moins dans un état de fonctionnement deux surfaces à faces planes et parallèles, qui sont orientées transversalement au rayon lumineux, inclinées autour d'un angle de basculement réglable.

Le document WO-A-2017029210 décrit un dispositif d'usinage destiné à percer ou à découper des substrats avec des bords bien droits.

Le document « Laser Assisted Joining of Plastic Metal Hybrids » de A. Roesner et al. XP028381666 décrit l'utilisation d'un laser pour créer des micros-structures dans une surface métallique puis d'y faire fondre une matière plastique par radiation laser. Le matériau plastique se répand dans les structures pour obtenir un composant hybride de plastique et de métal.

### Résumé de l'invention

Selon un premier aspect, un des buts de l'invention est de proposer une méthode de structuration d'une surface d'un substrat, le substrat pouvant par la suite être assemblé par sa surface structurée à un deuxième matériau, l'ensemble présentant de meilleures propriétés mécaniques d'adhésion et notamment un meilleur ancrage mécanique du deuxième matériau dans les structures formées en surface. À cet effet, l'invention propose une méthode de structuration d'un substrat ayant une surface supérieure et une surface inférieure telle que définie dans la revendication 1, ladite méthode comprenant les étapes suivantes :
a) fournir un dispositif comprenant :
   - une source lumineuse pour générer un faisceau lumineux entrant de structuration apte à usiner la surface supérieure du substrat ;
   - un système optique pour obtenir, à partir dudit faisceau lumineux entrant, un faisceau lumineux sortant spatialement décalé par rapport audit faisceau lumineux entrant, ledit système optique étant apte à modifier le décalage spatial entre ledit faisceau lumineux entrant et ledit faisceau lumineux sortant ;
   - des moyens de focalisation pour focaliser ledit faisceau lumineux sortant ;
   - un porte substrat ;
   - un dispositif de déplacement pour générer un mouvement relatif entre ledit faisceau lumineux sortant et ledit porte substrat ;
b) fournir et poser ledit substrat sur ledit porte substrat de sorte à présenter vers lesdits moyens de focalisation sa surface supérieure caractérisée par une normale ;
c) générer avec la source lumineuse le faisceau lumineux entrant ;
d) générer à partir du faisceau lumineux entrant lors de son passage dans le système optique, puis au travers des moyens de focalisation, un faisceau lumineux sortant focalisé décrivant avec la normale de la surface supérieure du substrat au niveau d'un point de focalisation du faisceau lumineux sortant un angle d'attaque supérieur à 1°, de préférence supérieur à 3°, pour tout décalage spatial entre faisceau lumineux sortant et faisceau lumineux entrant imposé par le système optique ;
e) initier un mouvement relatif entre le porte substrat supportant le substrat et le faisceau lumineux sortant focalisé afin de graver un motif à partir de la surface supérieure du substrat, le motif formé comprenant une cavité dans le substrat débouchant par une ouverture au niveau de la surface supérieure du substrat.
définir des paramètres de ladite source lumineuse (33) en fonction dudit mouvement relatif initié à l'étape e) pour générer ledit faisceau lumineux entrant tel que la cavité (3) du motif (17) formé est non-traversante entre ladite surface supérieure (16) et ladite surface inférieure dudit substrat (11) .

La méthode de l'invention permet de créer un motif dont la ou les cavités présentent une conicité négative à partir de la surface supérieure vers l'intérieur du substrat. Même si le terme de 'conicité négative' peut être compris par un homme du métier, il est décrit plus tard, notamment lors de la discussion des figures. Un tel profil du motif structuré et plus particulièrement de sa ou ses cavités permet d'obtenir un ensemble 'substrat structuré + deuxième matériau' qui présente une meilleure adhésion en favorisant notamment l'ancrage mécanique du deuxième matériau dans la ou les cavités.

La méthode de l'invention permet de graver des motifs qui correspondent à des évidements qui ont une conicité négative et qui sont non-traversant.

Il est généralement admis que les dispositifs d'usinage laser et par exemple le dispositif d'usinage décrit dans le document WO 2017/029210 A1 sont destinés à percer ou à découper des substrats avec des bords bien droits. De tels dispositifs d'usinage sont utilisés pour percer ou découper des pièces relativement petites, n'excédant pas des dimensions supérieures à 10 mm voir 20 mm. De tels dispositifs nécessitent une grande précision de déplacement de faisceau par rapport au substrat, un déplacement de précision étant de préférence réalisé par un système optique de type scanner ou tête galvanométrique. Un tel dispositif d'usinage ne paraît pas être recommandé pour la réalisation de structurations non-traversantes ayant une conicité négative, car un dispositif de perçage ou de découpe n'est pas destiné à la réalisation d'une structuration de surface. L'analogie avec une perceuse ou une scie qui ne permettent pas de réaliser une structuration de surface de manière bien contrôlée semble particulièrement adaptée au cas présent. Les inventeurs ont néanmoins démontré que l'utilisation d'un système optique permettant d'avoir un angle d'attaque contrôlable du faisceau lumineux avec la surface supérieur du substrat permet la réalisation d'une structuration de surface dont les motifs de structuration ont une conicité négative. Une telle structuration étant particulièrement bien adapté à la réalisation d'assemblages.

La méthode de l'invention permet de graver des motifs qui correspondent à des évidements ayant une conicité négative. Les motifs ainsi crées sont de préférence destinés à réaliser un assemblage entre le substrat comprenant les évidements et un autre substrat, l'assemblage étant essentiellement un assemblage par ancrage.

La méthode de l'invention permet de réaliser une structuration de manière efficace grâce au dispositif de déplacement du substrat qui peut être activé simultanément avec le faisceau lumineux sortant décrivant un angle supérieur à 3°, de préférence supérieur à 5° par rapport à une normale de la surface supérieure du substrat, ladite normale étant prise essentiellement à proximité d'un point de focalisation du faisceau lumineux sortant. Il est généralement admis que pour un usinage de précision (perçage, découpe) un moyen de déflection optique (scanner, tête galvanométrique) est particulièrement adapté pour un usinage rapide sur de petites surfaces. De plus grande surface d'usinage pouvant éventuellement être atteinte en déplaçant le substrat afin de réaliser plusieurs mailles d'usinage (stitching) et couvrir une plus grande surface.

L'activation simultanée du déplacement du substrat et de la source lumineuse permet dans le cadre de la présente invention de réaliser une structuration sur une grande surface sans avoir recours à un assemblage de zones structurées quand bien même il serait possible d'obtenir une structuration avec les configurations de dispositifs proposées par l'état de la technique. Ainsi la méthode de l'invention permet de réaliser la structuration d'un substrat en continu.

La détermination des paramètres laser est fonction de la vitesse du mouvement relatif principalement dicté par la vitesse de déplacement des moyens de déplacement, ainsi que de la puissance, de l'énergie, de la fréquence de répétition, de la taille du faisceau sortant... et enfin de l'épaisseur du matériau et de la nature du matériau.

De préférence le dispositif de déplacement permet un déplacement relatif jusqu'à 100 mm, de façon encore plus préférée jusqu'à 1,5 m. Par exemple le dispositif de déplacement permet un déplacement jusqu'à 10 et de manière encore plus préférée jusqu'à 40 m de sorte à pouvoir structure la surface d'un élément essentiellement long sur toute sa longueur afin de limiter les reprises dans le motif à cause de trop nombreuse reprises « stiching ».

Il est généralement admis que les dispositifs d'usinage laser et par exemple le dispositif d'usinage décrit dans le document WO 2017/029210 A1 est très efficace en découpe/perçage car il permet un mouvement de précession avec un déplacement du faisceau quasi-nul avec une grande modification de l'angle d'incidence du faisceau, cette propriété très importante pour la découpe/perçage n'est pas une propriété connue de l'homme du métier comme présentant un intérêt pour la structuration. Les inventeurs ont néanmoins démontré que l'utilisation du système optique selon l'invention permet d'obtenir une bonne exécution de la structuration avec des motifs ayant une conicité négative. Une telle structuration permet la réalisation d'assemblages ayant une grande tenue en traction, cisaillement et pelage.

Les inventeurs ont également trouvé que le système optique mis en œuvre par la méthode de l'invention permet d'obtenir des dimensions de rainure plus fines par rapport à d'autres systèmes optiques de l'état de la technique. En effet le système utilisé pour l'invention permet d'avoir un point de convergence des faisceaux plus proche de la surface ou sur la surface du substrat.

De préférence, le dispositif utilisé par la méthode de l'invention permet de réaliser des trous (ou cavités) traversants et/ou non traversants. Conformément à l'invention, la source lumineuse génère un faisceau lumineux entrant de structuration pulsé, avec, conformément à l'invention, les pulses du faisceau lumineux entrant de structuration ayant une durée entre 10⁻¹⁴s et 10⁻⁸s. Par exemple, le faisceau lumineux entrant de structuration est apte graver des trous et des rainures, traversant ou non traversant. De préférence la surface supérieure est essentiellement plane. De préférence, le faisceau lumineux sortant focalisé est apte à graver la surface supérieure du substrat.

Dans le cas d'une méthode de structuration ou d'usinage avec des impulsions ultracourtes et un faisceau lumineux sortant arrivant sur la surface du substrat avec un angle du faisceau lumineux sortant focalisé et une normale de la surface supérieure du substrat nul, alors la structuration ou l'usinage réalisé présente nécessairement un diamètre entrant plus grand que le diamètre plus en profondeur dans l'épaisseur du substrat. Cette caractéristique de forme de structuration ou d'usinage est inhérente à la méthode de structuration ou d'usinage avec des impulsions ultracourtes et un angle de faisceau lumineux sortant nul avec la surface du substrat ainsi qu'au profil d'intensité du faisceau laser utilisé. L'avantage du dispositif utilisé par la méthode de l'invention pour structurer un substrat par rapport à une méthode de structuration ou d'usinage avec des impulsions ultracourtes et un angle de faisceau lumineux sortant nul avec la surface du substrat est de permettre au faisceau lumineux sortant d'arriver sur la surface du substrat avec un angle contrôlé entre le faisceau lumineux sortant focalisé et une normale de la surface supérieure du substrat afin de former des structures en surface du substrat ayant de préférence une conicité négative et permettre ainsi de favoriser l'ancrage d'un deuxième matériau dans celles-ci.

Le dispositif utilisé par la méthode de l'invention permet notamment d'usiner des matériaux en contrôlant l'angle de structuration ou angle de gravure afin d'obtenir des angles de gravure contrôlés en fonction du matériau et du laser utilisé par exemple. Le dispositif utilisé par la méthode de l'invention permet par exemple d'obtenir des faces de gravure perpendiculaires avec la surface du substrat usiné. Ce dispositif permet d'obtenir des faces de gravure ayant un angle choisi par rapport à la surface du substrat. Une face de gravure ou de structuration est la face formée lors de l'usinage pour graver un substrat. De préférence, l'angle de la gravure ou de la structuration a une conicité négative lorsque la structuration ou l'usinage permet d'enlever de la matière en dessous de la surface par laquelle la pièce est usinée et pas uniquement à l'aplomb de l'endroit par lequel la pièce est usinée ou structurée.

De préférence, l'angle d'attaque supérieur à 1° et plus préférentiellement supérieur à 3°, est vrai pour tout décalage spatial du faisceau lumineux sortant par rapport au faisceau lumineux entrant imposé par le système optique.

Les lasers sont de préférence définis par un faisceau de type gaussien. Un faisceau gaussien est particulièrement adapté à l'usinage de matériaux. Un faisceau gaussien dans un milieu homogène est un faisceau lumineux qui possède une distribution gaussienne de l'intensité perpendiculairement à sa direction de propagation. Dans le cas d'un faisceau laser gaussien, l'intensité du faisceau est plus importante au centre du faisceau laser que sur ses bords.

Lors du passage d'un faisceau laser présentant un profil d'intensité gaussien à travers des moyens de focalisation, par exemple une lentille de focalisation ou un objectif télécentrique, le faisceau laser est de préférence focalisé en une tâche focale ou tâche de focalisation, c'est-à-dire un endroit où la densité du faisceau laser est la plus importante. Une tâche de focalisation est préférentiellement désignée par un point de focalisation.

La méthode de l'invention permet d'obtenir un substrat structuré avec une conicité négative pour réaliser un assemblage avec un deuxième matériau, l'assemblage ainsi obtenu présentant de meilleures propriétés mécaniques qu'avec un substrat non structuré. La structuration du substrat avec une conicité négative permet d'améliorer les propriétés mécaniques de l'assemblage, de préférence en traction, arrachement, cisaillement et pelage.

L'avantage de la méthode de l'invention est de pouvoir usiner ou structurer de grandes surfaces, de l'ordre de plusieurs mm² à plusieurs dizaines de cm², avec une largeur de structuration de par exemple 100 µm avec une répétition tous les 200 µm. En contrôlant l'angle d'attaque et ou le positionnement du substrat par rapport au faisceau lumineux sortant focalisé, l'ensemble selon l'invention permet de réaliser une structuration de la surface, un trou, une gravure ou une découpe du substrat avec une conicité contrôlée : positive, nulle ou avec une conicité négative.

De préférence, le mouvement relatif entre ledit substrat et ledit faisceau lumineux sortant est un mouvement relatif selon un plan parallèle à la surface supérieure, de sorte que le faisceau lumineux sortant focalisé puisse graver un motif à partir de la surface supérieure sur une surface essentiellement plane ayant une aire supérieure à 1 cm², de préférence supérieure à 10 cm² et de façon encore plus préférée supérieure à 100 cm². Par exemple de 50 mm × 10 mm, de préférence de 50 mm × 50 mm, de manière plus préférée de 100 mm × 100 mm. Par exemple de 100 mm × 1500 mm, de 20 mm × 2000 mm, de 20 × 5000 mm, de 50 mm × 10 mm, de préférence de 50 mm × 50 mm, de manière plus préférée de 100 mm × 100 mm.

De préférence, le substrat comprend une surface inférieure essentiellement séparée de ladite surface supérieure par une épaisseur dudit substrat, ladite cavité est non-traversante entre ladite surface supérieure et ladite surface inférieure dudit substrat et non-débouchante au niveau de ladite surface inférieure.

De préférence, le dispositif de déplacement est activé pour générer un déplacement entre ledit substrat et ledit faisceau lumineux sortant simultanément avec ladite source lumineuse.

De préférence, le décalage spatial entre le faisceau lumineux entrant et le faisceau lumineux sortant imposé par le système optique est un décalage spatial fixe par rapport aux moyens de focalisation de sorte à graver un motif ayant une cavité comprenant :
- au niveau de son ouverture sur ladite surface supérieure dudit substrat, une première et une deuxième extrémité définies dans un plan essentiellement perpendiculaire à ladite surface supérieure du substrat,
- une largeur d'ouverture définie par une distance entre ladite première et deuxième extrémité de ladite ouverture,
une largeur de cavité définie essentiellement parallèlement à ladite largeur d'ouverture qui est essentiellement décroissante à partir de la surface supérieure le long de l'épaisseur du substrat.

De préférence, la cavité comprend :
- au niveau de son ouverture sur la surface supérieure du substrat, une première et une deuxième extrémités définies dans un plan essentiellement perpendiculaire à la surface supérieure du substrat,
- une largeur d'ouverture définie par une distance entre la première et deuxième extrémités de l'ouverture,
la largeur d'ouverture étant strictement inférieure à une largeur maximale de cavité, définie essentiellement parallèlement à la largeur d'ouverture dans l'épaisseur du substrat.

De préférence, l'extension de l'ouverture mesurée essentiellement perpendiculairement à l'épaisseur augmente quand on s'éloigne de la surface supérieure vers l'intérieur du substrat.

De préférence, la cavité est caractérisée par un angle de conicité négative compris entre 0° et 7°, plus préférentiellement entre 0,01° et 5°, l'angle de conicité négative étant défini entre la normale à la surface supérieure du substrat et une droite passant par la première extrémité de la largeur d'ouverture.

De préférence, la surface supérieure du substrat est gravée de manière non-traversante.

Selon un mode de réalisation préféré, le système optique comprend :
- un miroir :
   ∘ ayant une surface de réflexion essentiellement plane définie par une normale pour obtenir un premier faisceau lumineux réfléchi issu d'un premier faisceau lumineux incident provenant dudit faisceau lumineux entrant,
   o mobile ;
- des moyens d'entrainement pour déplacer le miroir mobile ;
- un système de redirection :
   ∘ positionné par rapport au miroir pour obtenir à partir du premier faisceau lumineux réfléchi, un deuxième faisceau lumineux incident au miroir, pour obtenir le faisceau lumineux sortant à partir d'une réflexion du deuxième faisceau lumineux incident sur le miroir mobile.

Par exemple un avantage de ce mode de réalisation du dispositif utilisé dans la méthode de l'invention est de permettre l'usinage ou la structuration selon une ou deux dimensions afin d'obtenir une structuration selon une ligne, par exemple pour graver une structure décrivant un angle particulier avec la surface du substrat. Un autre avantage de ce mode de réalisation du dispositif utilisé par la méthode de l'invention est de pouvoir prendre en compte ou de corriger la non-homogénéité du profil d'intensité du faisceau laser utilisé.

Par exemple des cavités ayant une largeur de cavité définie essentiellement parallèlement à la largeur d'ouverture qui est essentiellement décroissante à partir de la surface supérieure le long de l'épaisseur du substrat sont obtenues grâce à un décalage du faisceau lumineux sortant en amont des moyens de focalisation selon un seul axe ou selon deux axes. Par exemple ces cavités peuvent être obtenues avec un miroir fixe et un système de déflection permettant de décaler le faisceau lumineux sortant en amont des moyens de focalisation selon un axe ou deux axes. Ces cavités ou rainures étant obtenu avec un angle d'attaque du faisceau laser focalisé fixe par rapport à la normale au substrat. Dans ce mode de réalisation de l'invention, une orientation du miroir permet de de changer l'orientation de la rainure. Dans ce mode de réalisation, les rainures peuvent être formées avec une précession du faisceau lumineux sortant par rapport à la surface du substrat ou sans précession.

De préférence, un système de déflection permet d'orienter un faisceau lumineux sortant selon une aire de dimension 2 × 3 cm, par exemple selon une aire de dimension 15 × 20 cm, la dimension de l'aire pouvant être couverte par un système de déflection est principalement dépendante de la distance focale de la lentille objectif et de façon plus général de la configuration du dispositif optique. Pour de grande surface couverte par le système de déflection, des aberrations au niveau de la forme des motifs peut être observée. Cependant pour des applications d'assemblage, de tels aberrations n'engendre pas de baisse de la qualité de l'assemblage observé.

Le système optique utilisé pour l'invention permet d'ajuster l'angle d'attaque du faisceau tout en étant compatible avec un système de déflection. Ceci est particulièrement avantageux pour réaliser de la structuration car cela permet de couvrir un champ de 20 à 30 mm uniquement avec le système de déflection, les dispositifs de l'état de la technique ne permettant de couvrir un champ de 1 à 2 mm.

De préférence le système optique en combinaison avec un système de déflection comprend des moyens de focalisation ayant une longue focale pour couvrir un champ plus grand allant jusqu'à 100 mm voir 150 mm dans une direction d'attaque. Cela permet d'exécuter une structuration selon une dimension de 100 mm par 100 mm sans avoir recours au dispositif de déplacement.

Selon un autre mode de réalisation préféré le système optique comprend :
- un miroir :
   ∘ ayant une surface de réflexion essentiellement plane définie par une normale pour obtenir un premier faisceau lumineux réfléchi issu d'un premier faisceau lumineux incident provenant du faisceau lumineux entrant,
   o mobile tel que sa normale soit apte à décrire une trajectoire dans un espace tridimensionnel ;
   le système optique étant configuré de sorte que le premier faisceau lumineux incident et la normale du miroir sont séparés par un angle compris entre 0° et 15° pour toutes les positions et orientations possibles du miroir mobile, de préférence entre 0,01° et 10° et encore plus préférentiellement entre 3° et 8° ;
- des moyens d'entrainement pour déplacer le miroir mobile ;
- un système de rétro-réflexion :
   o positionné par rapport au miroir pour obtenir à partir du premier faisceau lumineux réfléchi, un deuxième faisceau lumineux incident au miroir pour toutes les positions et orientations du miroir, pour obtenir le faisceau lumineux sortant à partir d'une réflexion du deuxième faisceau lumineux incident sur le miroir mobile, et
   o apte à fournir le deuxième faisceau lumineux incident sur le miroir, parallèle au premier faisceau lumineux réfléchi pour toutes les positions et orientations possibles du miroir (19) mobile.

De préférence, le système optique est configuré de sorte que le premier faisceau lumineux incident et la normale du miroir sont séparés par un angle compris entre 0,01° et 10°, pour toutes les positions et orientations possibles du miroir mobile, préférentiellement entre 0,1° et 8° et encore plus préférentiellement entre 3° et 8°.

De préférence, le miroir mobile est configuré pour décrire une rotation de 360° autour d'un axe de rotation sécant à la normale du miroir mobile, et en ce que les moyens d'entraînement sont configurés pour permettre au miroir mobile d'effectuer une rotation autour de l'axe de rotation.

De préférence, le système de rétro-réflexion est mobile en translation par rapport au miroir.

De préférence, le système optique est configuré pour obtenir en amont des moyens de focalisation et pour toutes les positions et orientations possibles du miroir mobile, un faisceau lumineux sortant apte à décrire dans un plan perpendiculaire à sa direction de propagation principale un cercle ayant un diamètre inférieur à 30 mm ou une ellipse dont le plus grand axe est inférieur à 30 mm , plus préférentiellement inférieur à 25 mm et encore plus préférentiellement, inférieur à 20 mm, ou une ellipse dont le plus grand axe est inférieur à 30 mm, plus préférentiellement inférieur à 25 mm et encore plus préférentiellement, inférieur à 20 mm.

Le plus grand axe de l'ellipse peut aussi être appelé le plus long diamètre de l'ellipse ou encore le plus grand diamètre.

De préférence, une modification de la distance entre le système de rétro-réflexion et le miroir est apte à induire une modification dudit diamètre ou dudit plus grand axe.

De préférence, la variation du diamètre ou du plus grand axe est apte à induire une variation de l'angle compris entre le faisceau lumineux sortant en aval des moyens de focalisation et une normale de la surface supérieure du substrat.

De préférence, le dispositif comprend en outre un système de déflection positionné entre le système optique et les moyens de focalisation pour décaler le faisceau lumineux sortant. Par exemple un système de déflection est un scanner, par exemple un scanner galvanométrique. Préférentiellement, le système de déflection est positionné en amont des moyens de focalisation.

De préférence, les moyens de focalisation comprennent un objectif télécentrique.

L'avantage d'utiliser un objectif télécentrique pour focaliser le faisceau lumineux sortant est de permettre une structuration ou un usinage avec angle d'attaque du faisceau lumineux sortant focalisé constant pour des variations d'orientation du faisceau lumineux sortant en amont de l'objectif télécentrique. De préférence un objectif télécentrique est utilisé avec un système de déflection afin de permettre une modification de la position du faisceau lumineux sortant sans pour autant modifier son angle d'attaque.

De préférence, les moyens de focalisation sont configurés pour focaliser le faisceau lumineux sortant sur la surface supérieure du substrat.

De préférence, les moyens de focalisation sont configurés pour focaliser le faisceau lumineux sortant dans un plan de focalisation pour toutes les positions et orientations possibles du miroir mobile.

De préférence, le dispositif comprend en outre un collimateur de faisceau positionné entre la source lumineuse et le système optique, configuré pour être traversé par le faisceau lumineux entrant et pour modifier la convergence du faisceau lumineux entrant, de sorte que la distance entre les moyens de focalisation et le point de focalisation du faisceau lumineux sortant est apte à être modifiée.

De préférence, le système optique est configuré de sorte qu'une projection du faisceau lumineux sortant, dans un plan de focalisation et pour toutes les positions et orientations possibles du miroir mobile, a un contour extérieur essentiellement circulaire.

Par exemple, l'intégration du faisceau lumineux sortant en aval du moyen de focalisation lors de sa précession décrit la forme d'un cône avec un angle d'attaque par rapport à la surface du substrat à structurer, usiner ou graver. Par exemple, la précession du faisceau lumineux sortant décrit un déplacement sensiblement circulaire sur le substrat à structurer, usiner ou graver.

De préférence, l'angle d'attaque est compris entre 1° et 15°, de préférence compris entre 2° et 5°, de manière encore préférée entre 3° et 4°, pour tout décalage spatial entre faisceau lumineux sortant et faisceau lumineux entrant imposé par le système optique.

De préférence, le système optique est apte à induire un mouvement de précession du faisceau lumineux sortant focalisé par rapport à la surface supérieure dudit substrat.

De préférence, les moyens d'entrainement du miroir mobile sont aptes à imposer une vitesse de rotation du miroir comprise entre 1000 et 200000 tours par minute, plus préférentiellement entre 5000 et 100000 tours par minutes et encore plus préférentiellement entre 10000 et 50000 tours par minutes et la vitesse de déplacement relatif du substrat par rapport au faisceau lumineux sortant focalisé est comprise entre 500 mm/s et 0.1 mm/s, plus préférentiellement, entre 200 mm/s et 0,5 mm/s et encore plus préférentiellement entre 100 mm/s et 1mm/s.

Par exemple, le diamètre du faisceau focalisé au point de focalisation est inférieur ou égal à la largeur d'ouverture de la cavité.

Selon un deuxième aspect, l'invention propose une méthode d'assemblage d'un substrat avec une pièce telle que définie dans la revendication 9, comprenant les étapes suivantes :
- structurer une surface supérieure du substrat à l'aide d'une méthode selon le premier aspect de l'invention, pour générer une première partie de surface supérieure structurée du substrat comprenant un motif ;
- fournir la pièce dont une surface présente une deuxième partie de surface comprenant un matériau fusible ayant un point de fusion plus bas que le point de fusion de la première partie de surface supérieure structurée du substrat ;
- disposer la première partie de surface supérieure structurée du substrat en contact avec la deuxième partie de surface de la pièce ;
- appliquer une pression de façon à maintenir le contact entre la première partie de surface supérieure structurée du substrat et la deuxième partie de surface de la pièce ;
- fournir un dispositif de chauffage pour créer une augmentation de température dans le matériau fusible suffisante pour le faire fondre ; et
- chauffer, grâce au dispositif de chauffage, le matériau fusible de manière à atteindre dans le matériau fusible, une température suffisante pour en faire fondre au moins une partie dans le motif de la première partie de surface supérieure structurée du substrat.

Les différentes variantes et avantages décrits pour la méthode selon le premier aspect de l'invention s'appliquent à la méthode d'assemblage selon le deuxième aspect, mutadis mutandis.

De préférence, le dispositif de chauffage est un laser apte à produire un faisceau laser capable de chauffer par irradiation la première partie de surface supérieure structurée du substrat et la pièce est au moins partiellement transparente au faisceau laser. Par exemple le dispositif de chauffage est un laser de soudage. Un meilleur assemblage sera obtenu en adaptant la longueur du faisceau laser avec un maximum du spectre d'absorption du matériau à chauffer. De préférence, la pièce comprend un polymère ou du verre. De préférence, le matériau fusible de la pièce pénètre dans le motif de la première partie de surface supérieure structurée du substrat par la surface supérieure du substrat.

De préférence, le matériau fusible de la pièce comprend des monomères et / ou des chaines de polymères, plus préférentiellement un polymère thermoplastique et encore plus préférentiellement un polymère thermoplastique élastomère. De préférence, le matériau fusible a au moins une température de transition et préférentiellement, cette au moins une température de transition est une température de transition vitreuse. Par exemple, le matériau fusible est chauffé au-delà de sa température de transition vitreuse. Préférentiellement, ladite au moins une température de transition est une température de fusion. Par exemple, le matériau fusible est chauffé au-delà de sa température de fusion.

Selon un troisième aspect, un des buts de l'invention est de fournir un ensemble comprenant un substrat et un dispositif pour structurer ledit substrat qui peut par la suite être assemblé avec un deuxième matériau et dont l'assemblage avec ce deuxième matériau présente une force d'adhésion ou résistance mécanique plus importante. Une meilleure résistance mécanique étant obtenue grâce à l'angle décrit par les structures à conicité négative formées et la surface du substrat. Les structures à conicité négative formées à la surface du substrat permettent une meilleure adhésion du deuxième matériau avec le substrat en favorisant notamment l'ancrage mécanique du deuxième matériau dans les structures à conicité négative. A cet effet, l'invention propose, selon ce troisième aspect, un ensemble comprenant un substrat ayant une surface supérieure et une surface inférieure et un dispositif pour structurer ledit substrat tel que défini dans la revendication 10, ledit dispositif comprenant :
- une source lumineuse pour générer un faisceau lumineux entrant de structuration apte à usiner la surface supérieure du substrat ;
- un système optique pour obtenir, à partir du faisceau lumineux entrant, un faisceau lumineux sortant spatialement décalé par rapport au faisceau lumineux entrant, le système optique étant apte à modifier le décalage spatial entre le faisceau lumineux entrant et le faisceau lumineux sortant ;
- des moyens de focalisation pour focaliser le faisceau lumineux sortant ;
- un porte substrat ;
- un dispositif de déplacement pour générer un mouvement relatif entre le faisceau lumineux sortant et le porte substrat ;

le substrat étant posé sur le porte substrat de sorte à présenter vers les moyens de focalisation sa surface supérieure caractérisée par une normale,
le dispositif étant configuré de sorte que le faisceau lumineux sortant focalisé et la normale de la surface supérieure du substrat au niveau d'un point de focalisation du faisceau lumineux sortant sont séparés par un angle d'attaque supérieur à 1°, de préférence supérieur à 3°, pour tout décalage spatial entre faisceau lumineux sortant et faisceau lumineux entrant imposé par le système optique.
des paramètres de ladite source lumineuse (33) sont définis en fonction dudit mouvement relatif pour générer ledit faisceau lumineux entrant tel que la cavité (3) du motif (17) formé est non-traversante entre ladite surface supérieure (16) et ladite surface inférieure dudit substrat (11).

Les différentes variantes et avantages décrits pour les méthodes selon les premier et deuxième aspects de l'invention s'appliquent à l'ensemble selon le troisième aspect, mutadis mutandis.

De préférence, le substrat comprend une surface inférieure essentiellement opposée à ladite surface supérieure, ladite cavité est non-débouchante au niveau de ladite surface inférieure.

De préférence, le dispositif de déplacement est apte à générer le mouvement relatif entre le substrat et le faisceau lumineux sortant selon une aire supérieure à 1 cm², de préférence supérieure à 10 cm² et de façon encore plus préférée supérieure à 100 cm², ledit mouvement relatif étant généré selon un plan parallèle à la surface supérieure, de sorte que le faisceau lumineux sortant focalisé puisse graver un motif à partir de la surface supérieure. Par exemple de 50 mm × 10 mm, de préférence de 50 mm × 50 mm, de manière plus préférée de 100 mm × 100 mm. Par exemple de 100 mm × 1500 mm, de 20 mm × 2000 mm, de 20 × 5000 mm, de 50 mm × 10 mm, de préférence de 50 mm × 50 mm, de manière plus préférée de 100 mm × 100 mm.

De préférence, le dispositif est configuré de sorte que ledit faisceau lumineux sortant focalisé et une normale de ladite surface supérieure dudit substrat au niveau d'un point de focalisation dudit faisceau lumineux sortant sont séparés par un angle d'attaque compris entre 1° et 15°, de préférence compris entre 2° et 5°, de manière encore préférée entre 3° et 4°, pour tout décalage spatial entre faisceau lumineux sortant et faisceau lumineux entrant imposé par ledit système optique.

L'avantage du dispositif compris dans l'invention est de permettre la focalisation d'un faisceau laser avec un angle d'attaque contrôlé dans deux dimensions. Le dispositif de l'invention permet également l'usinage ou la structuration selon une dimension pour une structuration selon une ligne et permet également la formation de trous circulaires ou de motifs plus complexes avec un angle d'attaque du faisceau lumineux de sortie constant.

L'avantage du dispositif compris dans l'invention et plus particulièrement du système optique est d'être relativement léger et peu encombrant. De plus le décalage latéral en amont du moyen de focalisation et donc l'angle d'attaque sur le substrat peuvent être contrôlés facilement par le positionnement relatif du miroir avec le système de rétro réflexion.

Un faisceau laser pour la structuration ou l'usinage est de préférence considéré comme ayant un profil d'intensité gaussien. Un faisceau laser focalisé dans un plan signifie que pour plusieurs positions du faisceau laser, la tâche de focalisation est comprise dans ledit plan. De préférence, une tâche de focalisation d'un faisceau laser focalisé comprend une profondeur de champ. Pour plusieurs positions du faisceau laser dans un plan, la tâche de focalisation est comprise dans ledit plan c'est-à-dire qu'une position de la tâche de focalisation située dans la profondeur de champ de la tâche de focalisation est comprise dans ledit plan.

De préférence, le plan de focalisation est parallèle à la surface supérieure du substrat. Préférentiellement, le plan de focalisation est confondu avec la surface supérieure du substrat. De préférence, les moyens de focalisation comprennent un axe optique. De préférence, les moyens de focalisations sont une lentille convergente.

De préférence, le décalage spatial entre le faisceau lumineux entrant et le faisceau lumineux sortant imposé par le système optique est un décalage spatial fixe par rapport aux moyens de focalisation de sorte qu'un déplacement relatif engendré par les moyens de déplacement permette de graver une motif tel que ladite cavité comprend :
- au niveau de son ouverture sur ladite surface supérieure dudit substrat, une première et une deuxième extrémités définies dans un plan essentiellement perpendiculaire à ladite surface supérieure du substrat,
- une largeur d'ouverture définie par une distance entre ladite première et deuxième extrémités de ladite ouverture,
- une largeur de cavité définie essentiellement parallèlement à ladite largeur d'ouverture qui est essentiellement décroissante à partir de la surface supérieure le long de l'épaisseur du substrat.

De préférence, le dispositif de déplacement permet de générer un mouvement linéaire à une vitesse jusqu'à 100 mm/s, plus préférentiellement à une vitesse jusqu'à 50 mm/s et encore plus préférentiellement à une vitesse jusqu'à 25 mm/s.

Selon un quatrième aspect, l'invention propose un système pour l'assemblage d'un substrat avec une pièce comprenant un matériau fusible ayant un point de fusion plus bas que le point de fusion du substrat tel que défini dans la revendication 15, le système comprenant :
- un ensemble selon le troisième aspect de l'invention pour structurer une surface supérieure du substrat ;
- un moyen de mise en contact de la pièce avec la surface supérieure du substrat ;
- un moyen de mise en compression ;
- un dispositif de chauffage capable de créer une augmentation de température suffisante dans le matériau fusible pour en faire fondre au moins une partie.

Les différentes variantes et avantages décrits pour les méthodes selon les premier et deuxième aspects de l'invention et pour l'ensemble selon le troisième aspect de l'invention s'appliquent au système selon le quatrième aspect, mutadis mutandis.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un mode de réalisation d'un dispositif pour structurer un substrat selon l'invention,
- la figure 2 illustre un mode de réalisation du système optique compris dans le dispositif pour structurer un substrat selon l'invention,
- les figures 3a, 3b et 3c illustrent les étapes permettant la structuration d'un substrat avec une conicité négative selon la méthode du premier aspect de l'invention,
- la figure 4 illustre un mode de réalisation d'un substrat obtenu par une méthode selon une réalisation possible de l'invention,
- la figure 5 illustre un mode de réalisation d'un substrat obtenu par une méthode de structuration selon l'invention ;
- la figure 6 illustre un mode de réalisation d'un substrat obtenu par une méthode de structuration selon l'invention.

### Exemples de modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. Dans le contexte du présent document, les termes « premier » et « deuxième » servent uniquement à différencier les différents éléments et n'impliquent pas d'ordre entre ces éléments. Sur les figures, les éléments identiques ou analogues peuvent porter les mêmes références.

La méthode de structuration selon le premier aspect de l'invention permet de structurer et ou d'usiner une surface d'un substrat 11 avec un faisceau lumineux 7 ayant un angle d'attaque 107 par rapport à une normale 106 à la surface du substrat 11 de préférence supérieure à 1°. Différents systèmes optiques 2 pourraient être utilisés pour différents modes de réalisation permettant de faire varier l'angle d'attaque 107 du faisceau lumineux 7 par rapport à une normale 106 à la surface supérieure 16 du substrat 11. Par exemple un ou plusieurs modes de réalisation permettent d'obtenir un faisceau lumineux sortant 7 décalé par rapport au faisceau lumineux entrant 1 avec un système optique 2 utilisant un miroir 19 mobile. Par exemple un miroir 19 mobile ayant une normale 26 est apte à décrire une trajectoire dans un espace bidimensionnel ou tridimensionnel. Par exemple un mode de réalisation de l'invention permet grâce au dispositif de déplacement 60 d'imposer au substrat 11, un angle d'attaque 107 par le déplacement du substrat par rapport au faisceau lumineux sortant 7 focalisé. Par exemple, un autre mode de réalisation permet d'imposer un angle d'attaque 107 supérieur à 1° par un décalage du faisceau lumineux sortant 7 par rapport au faisceau lumineux entrant 1 grâce au système optique 2 et par le déplacement du substrat 11 par le système de déplacement 60 par rapport au faisceau lumineux sortant 7.

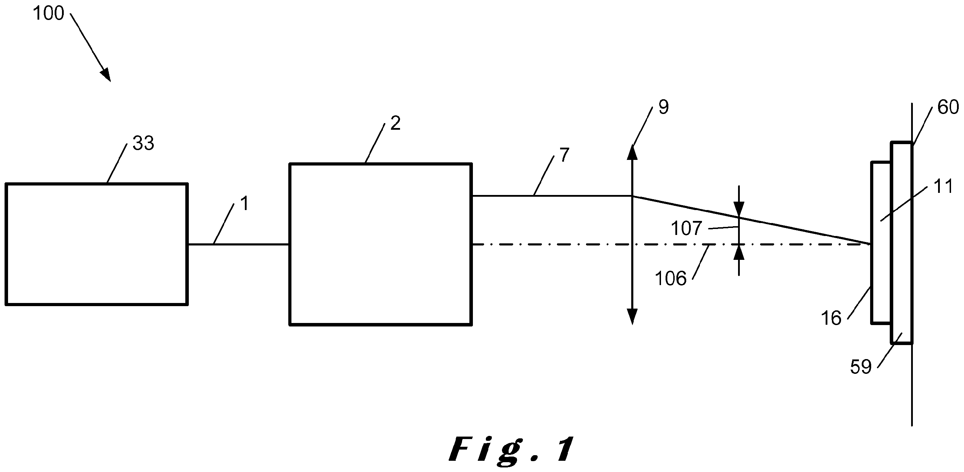

La figure 1 montre le schéma d'un mode de réalisation possible du dispositif 100 de structuration de l'invention. Le dispositif 100 de structuration comprend une source lumineuse 33 qui est de préférence une source laser et encore plus préférentiellement une source laser pulsée qui permet de produire un faisceau lumineux entrant 1. Le dispositif 100 de structuration comprend un système optique 2 qui permet d'obtenir à partir du faisceau lumineux entrant 1, un faisceau lumineux sortant 7 qui est spatialement décalé par rapport audit faisceau lumineux entrant 1. Tel qu'il est montré sur la figure 1, le faisceau lumineux sortant est focalisé sur un substrat 11 en passant au travers d'un moyen de focalisation 9, une lentille convergente par exemple. Une lentille convergente est par exemple de type biconvexe symétrique, biconvexe asymétrique, plan-convexe ou encore ménisque convergent. Une lentille convergente est de préférence sphérique. Le dispositif 100 comprend également des moyens de déplacement 60 pour déplacer le substrat 11. Le substrat 11 est positionné sur un dispositif de déplacement 60 permettant le positionnement du substrat 11 relativement par rapport au faisceau lumineux sortant 7. Le système optique 2 permet d'induire au faisceau lumineux sortant 7 un mouvement de rotation avant de passer à travers le moyen de focalisation 9. Ainsi le faisceau lumineux sortant 7 avant de passer au travers du moyen de focalisation 9 est toujours parallèle à lui-même quelle que soit sa position lors de son mouvement de rotation. En effet le système optique permet le décalage latéral du faisceau lumineux sortant 7 tel qu'il est toujours parallèle à lui-même. En considérant un plan au niveau de l'entrée du faisceau lumineux sortant 7 perpendiculaire au faisceau lumineux sortant 7, la projection du faisceau lumineux sortant 7 sur ce plan lors de son mouvement de rotation décrit de préférence un cercle. Le faisceau lumineux sortant 7 décrit un mouvement de précession après avoir traversé le moyen de focalisation 9. Le faisceau lumineux sortant 7 est focalisé en un point, en une tâche ou en une petite surface sur le substrat 11 à usiner ou à structurer.

Sur la figure 1, le mouvement de rotation imposé par le système optique 2 au faisceau lumineux sortant 7 se produit autour d'un axe 106 préférentiellement appelé axe de précession. L'axe autour duquel se produit le mouvement de précession du faisceau lumineux sortant 7 est de préférence aligné avec l'axe optique 106 du moyen de focalisation 9. Ainsi le faisceau lumineux sortant 7 est focalisé en un point, en une tâche ou en une petite surface centré sur l'axe optique 106 du moyen de focalisation 9. La focalisation du faisceau lumineux sortant 7 par le moyen de focalisation 9 se fait en un point, une tâche ou une petite surface de focalisation situé à une distance sur l'axe optique 106 du moyen de focalisation 9 constitué d'une lentille convergente correspondant au foyer image de la lentille convergente. Par exemple pour réaliser une structuration de la surface supérieure 16 d'un substrat 11, la lentille convergente est positionnée afin que son foyer image soit au niveau de la surface supérieure 16 du substrat 11. En fonction de la profondeur de la structuration ou de l'usinage désiré, le foyer image de la lentille convergente (du moyen de focalisation) peut être déplacé plus en profondeur sous la surface supérieure 16 du substrat 11. Par exemple, dans le cas d'une structuration traversant le substrat 11 ou d'une gravure, le foyer image du moyen de focalisation 9 est déplacé dans la profondeur du substrat 11. Le bon positionnement du foyer image du moyen de focalisation 9 permet d'obtenir une structuration ou une gravure ayant des bords bien droits et bien net, c'est-à-dire sans zones de refondues par exemple.

Par exemple une lentille convergente comprise dans un moyen de focalisation 9 a une distance focale comprise entre 10 mm et 160 mm, plus préférentiellement entre 20 mm et 100 mm. Par exemple la lentille convergente peut être échangée afin qu'elle est une distance focale de 80 mm, de 50 mm ou de 30 mm. Par exemple un objectif télécentrique compris dans les moyens de focalisation 9 a une distance focale comprise entre 10 mm et 160 mm, plus préférentiellement entre 20 mm et 100 mm. Par exemple l'objectif télécentrique est utilisé lorsqu'un moyen de déflection est positionné entre le système optique 2 et les moyens de focalisation 9.

Pour une distance focale de la lentille convergente du moyen de focalisation 9 donnée, l'amplitude du décalage latéral du faisceau lumineux sortant 7 avant de passer au travers du moyen de focalisation 9 permet de modifier l'angle d'attaque 107 du faisceau lumineux sortant 7 avec une normale 106 de la surface supérieure 16 du substrat 11. Dans ces conditions, une augmentation de l'amplitude de décalage latéral engendre une valeur d'angle d'attaque 107 plus importante. L'angle d'attaque 107 a de préférence un angle d'attaque 107 compris entre 3° et 10°. En fonction de l'angle d'attaque désiré et en fonction de la précision de la structuration ou de l'usinage désiré, la distance focale de la lentille convergente peut être adaptée. Une lentille convergente avec une distance focale de 80 mm permet par exemple un angle d'attaque 107 maximal d'environ 5° et permet de réaliser pour une position du substrat 11 une structuration ou un trou ayant une dimension maximale de 1000 µm et une dimension minimale de 90 µm. Une lentille convergente avec une distance focale de 50 mm permet par exemple un angle d'attaque 107 maximal d'environ 7° et permet de réaliser pour une position du substrat 11 une structuration ou un trou ayant une dimension maximale de 500 µm et une dimension minimale de 60 µm. Une lentille convergente avec une distance focale de 30 mm permet par exemple un angle d'attaque 107 maximal d'environ 10° et permet de réaliser pour une position du substrat 11 une structuration ou un trou ayant une dimension maximale de 200 µm et une dimension minimale de 40 µm. Le choix du moyen de focalisation et dans le cas d'une lentille convergente, de sa distance focale permet de modifier l'angle d'attaque 107 du faisceau lumineux sortant 7 avec une normale 106 issue de la surface supérieure 16 du substrat 11.

Les moyens de déplacement 60 sont par exemple des moyens de déplacement à commande numérique pilotés par ordinateur. Les moyens de déplacement 60 permettent par exemple d'effectuer des translations selon 5 axes. Dans la configuration d'un système optique 2 à miroir 19 mobile en rotation, il est possible de définir une rotation du miroir continue avec une position angulaire du miroir indépendante de la position du substrat à usiner ou à structurer. Il est également possible d'imposer une position angulaire du miroir 19 en fonction de la position du substrat à usiner ou à structurer afin de pouvoir usiner ou structurer le substrat 11 avec un angle d'incidence 107 pour une certaine position du substrat 11. Un porte substrat 59 est positionné sur les moyens de déplacement 60. Le porte substrat 59 permet un bon maintien du substrat par rapport aux moyens de déplacement 60. Le porte substrat 59 permet une bonne transmission des mouvements de translation induit par les moyens de déplacement 60 au substrat 11.

La source lumineuse 33 est de préférence une source lumineuse monochromatique de type laser pouvant avoir des longueurs d'ondes de 258 nm, 266 nm, 343 nm, 355 nm, 515 nm, 532 nm, 1030 nm et 1064 nm. Le dispositif 100 selon l'invention permet l'utilisation des longueurs d'ondes citées ci-dessus sans pour autant être limité à d'autres longueurs d'ondes dans l'intervalle 250 nm à 1100 nm.

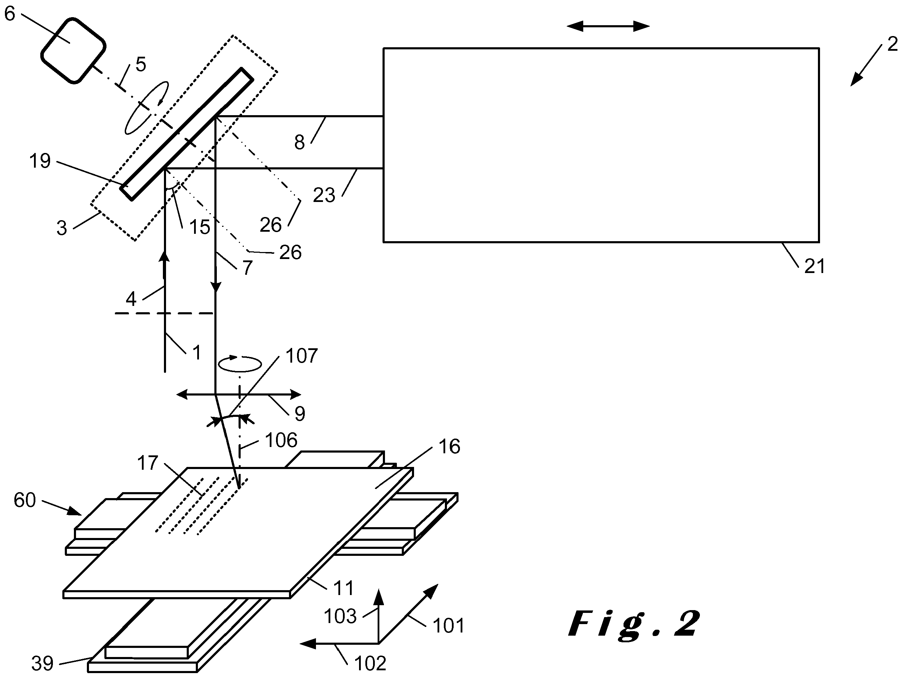

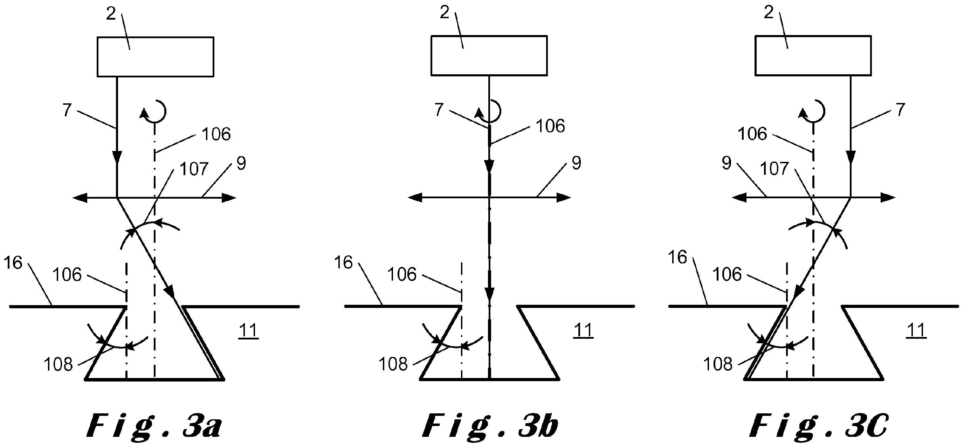

La figure 2 montre un exemple de mode de réalisation du dispositif 100 et en particulier du système optique 2 et du dispositif de déplacement 60. Dans le mode de réalisation du système optique présenté en figure 2, le faisceau lumineux entrant 1 est un faisceau lumineux généré par la source lumineuse 33 et voyageant de préférence à l'extérieur du système optique 2 avant d'y pénétrer alors que le faisceau lumineux incident 4 voyage uniquement à l'intérieur du système optique 2. Le faisceau lumineux incident 4 peut être obtenu par la déflexion du faisceau lumineux entrant 1 ou sans déflexion du faisceau lumineux entrant 1. Dans le mode de réalisation de la figure 2, le faisceau lumineux entrant 1 et le faisceau lumineux incident 4 sont sur la même trajectoire linéaire. Le système optique 2 comprend un miroir 19 qui permet d'obtenir un premier faisceau lumineux réfléchi 23 par la réflexion du faisceau lumineux incident 4. Le système optique 2 comprend également un système de rétro-réflexion 21 qui permet de rediriger le premier faisceau lumineux réfléchi 23 sur le miroir 19. En d'autres termes, le deuxième faisceau lumineux incident 8 en direction du miroir 19 est obtenu par le passage du premier faisceau lumineux réfléchi 23 dans le système de rétro réflexion 21. Le deuxième faisceau lumineux incident 8 est alors réfléchi par le miroir 19 et forme un faisceau lumineux sortant 7. Le système optique 2 est configuré de telle sorte que le faisceau lumineux sortant 7 est spatialement décalé par rapport au faisceau lumineux entrant 1 tout en restant parallèle à la direction du faisceau lumineux entrant 1 en amont du moyen de focalisation 9. Dans l'exemple montré par la figure 2, le faisceau lumineux entrant 1 et le faisceau lumineux sortant 7 sont décalés de façon transversale. En figure 2, le miroir 19 peut effectuer une rotation complète autour d'une axe de rotation 5 et des moyens d'entraînement 6 permettent de mettre le miroir 19 en rotation autour de son axe de rotation 5. Le système optique 2 du dispositif 100 est configuré de sorte le premier faisceau lumineux incident 4 et la normale 26 au miroir 19 sont séparés par un angle 15 compris entre 0° et 15° pour toutes les positions et orientation possibles du miroir 19 mobile. Cet angle 15 n'est pas montré à l'échelle sur la figure 2 pour des raisons de clarté de la figure. Le système optique 2 est configuré de sorte qu'une modification de position entre le miroir 19 et le système de rétro réflexion 21 permet d'induire une variation du décalage entre les faisceaux lumineux entrant 1 et sortant 7. Le système optique est par exemple monté sur une platine de déplacement. Dans le mode de réalisation montré à la figure 2, en fonction de la position angulaire du miroir 19 mobile, le faisceau lumineux sortant 7 va suivre une trajectoire différente. De préférence chacune des trajectoires du faisceau lumineux sortant 7 obtenue pour chacune des positions angulaires du miroir 19 mobile sont parallèles. Le système optique 2 comprend également un ou des moyens de focalisation 9 pour focaliser le faisceau lumineux sortant 7 sur le substrat 11. Le mouvement de rotation du faisceau lumineux sortant 7 engendré par la rotation du miroir 19 en amont du moyen de focalisation 9, permet de produire le mouvement de précession du faisceau lumineux sortant 7 en aval du moyen de focalisation 9. Le mouvement de précession du faisceau lumineux sortant 7 est de préférence produit en un point, une tâche ou une petite surface sur un substrat 11 destiné à être structuré ou usiné. Le mouvement de précession est illustré sur les figures 2, 3a, 3b et 3c par des flèches décrivant une portion de cercle. Enfin le dispositif comprend des moyens de déplacement 60 permettant de déplacer le substrat 11 relativement par rapport au faisceau lumineux sortant 7. Les moyens de déplacement 60 permettent par exemple de déplacer le substrat selon les directions 101, 102 et 103. Les directions 101, 102 et 103 définissant de préférence un système de coordonnées cartésiennes en trois dimensions.

En plus des moyens d'entraînement 6 permettant la mise en rotation du miroir 19 mobile, des moyens pour imposer un mouvement de translation du miroir 19 mobile et ou des moyens permettant de modifier l'inclinaison du miroir 19 mobile peuvent être présents (miroir 19 inclinable selon deux ou plus directions non parallèles et des moyens d'entrainement apte à modifier l'inclinaison du miroir 19, ces moyens d'entrainement étant par exemple un système piézoélectrique). L'intérêt de combiner un mouvement de translation et un mouvement de rotation du miroir 19 est de générer par le mouvement relatif de rotation entre le miroir 19 et le système de rétro réflexion 21, une précession du faisceau lumineux sortant 7 en aval du moyen de focalisation 9, et, par le mouvement de translation relative entre le miroir 19 et le système de rétro réflexion 21, de modifier l'angle d'attaque 107 avec le substrat 11. Des exemples de moyens d'entrainement sont des moteurs électriques, des moteurs brushless.

Le système de rétro réflexion 21 compris dans le système optique 2 comprend par exemple un prisme de Dove et un prisme isocèle à angle droit. Un autre mode de réalisation d'un système de rétro réflexion comprend par exemple un prisme de Dove, un prisme isocèle à angle-droit, une lame demi-onde, un prisme en toit et un miroir semi-réfléchissant polarisant.

Les figures 3a, 3b et 3c montrent le faisceau lumineux sortant 7 issu du système optique 2 dans trois positions différentes lors de son mouvement de précession en aval du moyen de focalisation 9. Les figures 3a, 3b et 3c montrent système optique 2 permettant de générer un faisceau lumineux sortant 7 qui est, en amont du moyen de focalisation 9 décalé dans l'espace autour du centre optique 106 du moyen de focalisation 9. Le moyen de focalisation 9 étant par exemple une lentille convergente. En amont de la lentille convergente, la figure 3a montre un faisceau lumineux sortant 7 décalé à gauche du centre optique de la lentille convergente, la figure 3b montre un faisceau lumineux sortant 7 décalé en avant ou en arrière du centre optique 106 de la lentille convergente et la figure 3c montre un faisceau lumineux sortant 7 décalé à droite du centre optique 106. De préférence, le décalage en avant ou en arrière par rapport au centre optique 106 illustré par la figure 3b correspond à la même distance que le décalage à gauche ou à droite du centre optique 106 des figures 3a et 3c. De préférence, la projection décrite par le faisceau lumineux sortant 7 sur la surface amont de la lentille convergente 9 est un cercle. De préférence le centre du cercle décrit par le faisceau lumineux sortant 7 sur la surface amont de la lentille convergente 9 est confondu avec le centre optique de la lentille convergente 9.

Les figures 3a, 3b et 3c montrent que la position du faisceau lumineux sortant 7 sur la lentille convergente permet de modifier l'angle d'attaque 107 du faisceau lumineux sortant 7 avec une normale 106 à la surface supérieure 16 du substrat 11. L'angle d'attaque 107 du faisceau lumineux sortant 7 est contrôlé grâce au choix de la lentille convergente et au décalage latéral du faisceau lumineux sortant par rapport au centre optique de la lentille convergente. Le mouvement de rotation du faisceau lumineux sortant 7 en amont de la lentille permet de créer un mouvement de précession en aval de la lentille convergente 9 qui présente un angle d'attaque qui peut être choisi. En fonction de l'angle d'attaque 107 choisi, le substrat 11 est structuré ou usiné avec une conicité contrôlée. Le contrôle de l'angle d'attaque 107 permet par exemple de compenser la distribution en énergie du faisceau laser afin d'obtenir une structuration ou un usinage avec une conicité nulle. Le contrôle de l'angle d'attaque 107 permet par exemple de compenser la distribution en énergie du faisceau laser afin d'obtenir une structuration ou un usinage avec une conicité négative.

Les figures 3a, 3b et 3c montrent des positions du faisceau lumineux sortant 7 focalisé permettant la formation d'une structuration, d'un trou ou d'un usinage à conicité négative. La conicité négative est par exemple caractérisée par un angle de conicité négative 108 décrit par une normale 106 à la surface supérieure 16 du substrat 11 et un bord de la structuration ou de la partie usinée par le faisceau lumineux sortant 7 focalisé. Par exemple lors de la structuration ou de l'usinage d'un substrat, la position de la lentille convergente 9 est modifiée par rapport à la surface supérieure 16 du substrat afin de modifier la position du foyer image de la lentille et ainsi de modifier le point, la tâche ou la petite surface de focalisation du faisceau lumineux sortant 7. La profondeur de structuration est par exemple définie de manière non-exhaustive par la vitesse de la précession, par l'intervalle entre chaque pulse lumineux, par la quantité d'énergie de chaque pulse lumineux, par la longueur d'onde du faisceau lumineux, par le coefficient d'absorption du substrat, par les propriétés physiques du substrat...

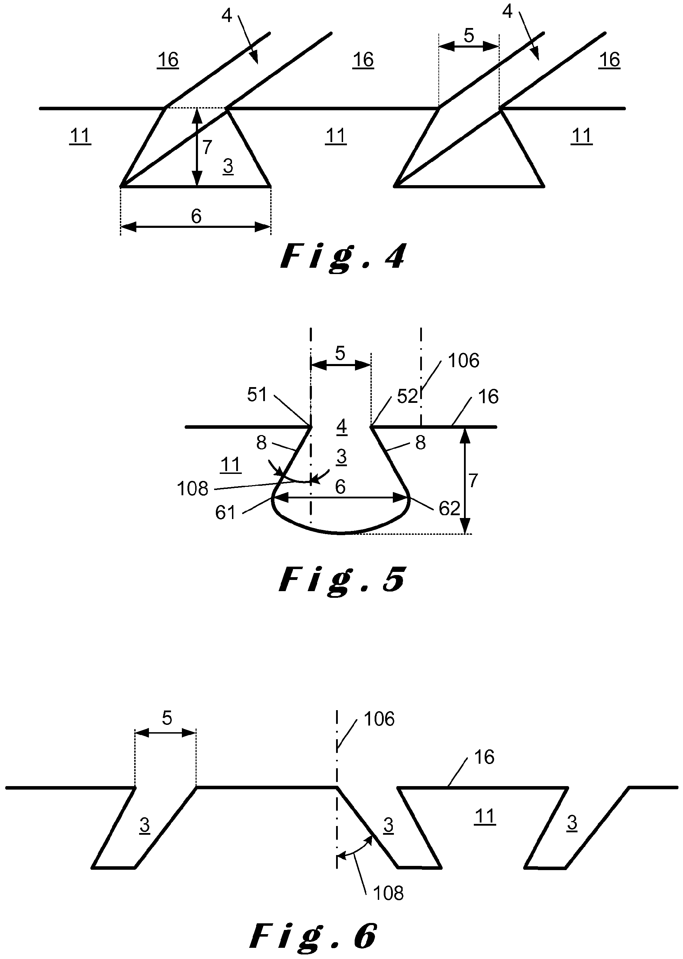

La figure 4 montre un substrat structuré selon un mode de réalisation selon un second aspect de l'invention. La figure 4 montre deux structures ou motifs 17 parallèles en forme de rainures 17 formés selon la méthode de l'invention. Ces rainures 17 sont formées selon la méthode et notamment en effectuant les étapes suivantes : a) fournir le dispositif 100 ; b) fournir le substrat 11 de sorte qu'il puisse être translaté par le dispositif de déplacement 60 par rapport au faisceau lumineux sortant 7 focalisé ; c) générer avec la source lumineuse 33 le faisceau lumineux entrant 1 apte à graver le substrat 11 à partir de sa surface supérieure 16 ; d) générer à partir du faisceau lumineux entrant 1 lors de son passage dans le système optique 2 puis au travers des moyens de focalisation 9, un faisceau lumineux sortant 7 focalisé décrivant un mouvement de précession par rapport à la surface supérieure 16 du substrat 11 ; e) déplacer le substrat 11 relativement par rapport au faisceau lumineux sortant 7 focalisé décrivant un mouvement de précession au moyen du dispositif de déplacement 60 afin de graver un motif 17 et plus particulièrement des rainures 17 à partir de la surface supérieure 16 dudit substrat 11, les rainures 17 formées comprenant une cavité 3 débouchant par une ouverture 4 à la surface supérieure 16 du substrat 11.

Sur les figures 4 et 5, les motifs ou rainures formées 17 comprennent chacune une cavité 3 ainsi que des parois latérales 8, la cavité 3 décrite dans un plan essentiellement perpendiculaire à la surface supérieure 16, comprend au niveau de son ouverture 4 sur la surface supérieure 16 du substrat 11, une première 51 et une deuxième 52 extrémités définies par une intersection entre la surface supérieure 16 et les parois latérales 8. Il est possible de définir une largeur d'ouverture 5 par la distance entre la première 51 et la deuxième 52 extrémités de l'ouverture 4. Une largeur maximale 6 de la cavité 3 est parallèle à la surface supérieure 16 du substrat 11 de sorte que la largeur maximale 6 de la cavité 3 définie une première 61 et une deuxième 62 extrémité de la largeur maximale 6 avec les parois latérales 8 de la cavité 3. Une profondeur maximale 7 de la cavité 3 peut également être décrite comme étant la profondeur de la rainure 17 ou de la structuration 17 par rapport à la surface supérieure 16 du substrat 11. Sur les figures 4 et 5, la largeur d'ouverture 5 de la cavité 3 est strictement plus petite que la largeur maximale 6 de la cavité 3. La cavité 3 est une représentée sur la figure 4 tel une rainure 17 ou une structuration de surface. Les rainures ou structurations ayant une largeur d'ouverture 5 de la cavité 3 plus petite que la largeur maximale 6 ou largeur sous la surface sont dites rainures ou structuration a conicité négative.

L'angle de conicité négative 108 décrit entre une paroi 8 de la rainure 17 et une normale 106 à la surface supérieure 16 du substrat 11 permet de définir la structuration de surface. Il est également possible d'obtenir une conicité de rainure nulle lorsque l'angle 108 est égal ou très proche de zéro. Une conicité positive peut également être obtenue par le dispositif et la méthode de l'invention.

La largeur 5 de l'ouverture 4 de la structuration est de préférence comprise entre 1 mm et 10 µm, plus préférentiellement comprise entre 500 µm et 30 µm et plus préférentiellement comprise entre 150 µm et 50 µm. La largeur maximale 6 de la structuration est de préférence comprise entre 1,1 mm et 15 µm, plus préférentiellement comprise entre 550 µm et 45 µm et plus préférentiellement comprise entre 200 µm et 60 µm.

Les rainures ont une profondeur 7 de l'ordre de 10 à 200 µm. Les inventeurs ont trouvé que intervalle de profondeur 7 est optimal pour l'adhésion du substrat 11 structuré avec un deuxième matériaux. Une profondeur 7 comprise entre 50 µm et 150 µm est particulièrement préférée.

La figure 6 montre un exemple de rainures formées pour un mode de réalisation particulier de l'invention. La figure 6 montre dans un plan essentiellement perpendiculaire à la surface supérieure 16 du substrat 11, des rainures formées et comprenant une cavité 3. Ces rainures formées ont une largueur pouvant varier mais présentent un angle de conicité 108 par rapport à une normale 106 à la surface supérieure 16 du substrat 11 non nul. Dans un autre mode de réalisation, ces rainures ont une largeur constante dans l'épaisseur du substrat et présentent un angle de conicité 108 par rapport à une normale 106 à la surface supérieure 16 du substrat 11 non nul. Ces rainures en biais par rapport à une normale 106 présentent, dans la direction de la normale 106, une partie de la cavité 3 située sous la surface supérieure 16 du substrat et une partie de la cavité située sous l'ouverture 4. Plusieurs rainures formées en biais par rapport à la surface supérieure 16 avec une largeur 5 dans l'épaisseur peuvent être formées telles qu'illustrées en Figure 6, c'est-à-dire en présentant une symétrie l'une par rapport à l'autre dans un plan de coupe. Par exemple, pour une pluralité de rainures, une rainure sur deux présentent une même orientation dans un plan de coupe. La formation de ces rainures en biais nécessite par exemple un système optique 2 nécessitant un miroir 19 mobile et un système de redirection pouvant être un simple miroir. Ces rainures permettent par exemple d'obtenir des propriétés d'assemblage avec un deuxième matériau comparables à celles obtenues avec les rainures montrées en Figure 4. En effet, les rainures présentées en Figure 6 peuvent être vues comme une décomposition de la propriété d'ancrage mécanique des rainures présentées en Figure 4. L'ancrage mécanique d'un deuxième matériau étant créé par le deuxième matériau présent sous la surface du substrat et pas seulement sous l'ouverture 4. Ainsi les rainures en biais telles que présentées en Figure 6 permettent, pour autant qu'elle soit suffisamment rapprochées, d'obtenir un effet d'ancrage mécanique d'un deuxième matériau proche de celui créé par les rainures en Figure 4. L'angle des parois 8 des rainures en biais avec une normale 106 est de préférence non nul et plus préférentiellement compris entre 0° et 30° et encore plus préférentiellement compris entre 1° et 20°. Par exemple les rainures en biais ont une largeur d'ouverture 5 pouvant varier le long de ces rainures et présenter un profil conique. La formation de deux cavités 3 ou plus à la surface supérieure 16 d'un substrat 11 permet la création de structures afin d'obtenir un bon ancrage mécanique d'un deuxième matériau et d'obtenir une rupture cohésive dans le deuxième matériau lors d'un essai mécanique.

En introduisant un deuxième matériau dans les rainures du substrat structuré, il est possible de réaliser un guide d'onde. Le deuxième matériau est alors inséré dans la structuration à conicité négative par la surface supérieure du substrat. De préférence, le deuxième matériau est un polymère qui est polymérisé à l'intérieur de la structuration à conicité négative. Le deuxième matériau a un indice de réfraction supérieur à l'indice de réfraction du substrat. Le deuxième matériau comprend un matériau polymère et ou plus préférentiellement du poly(méthacrylate de méthyl). Un substrat comprenant un métal, un verre, une céramique ou un matériau polymère peuvent par exemple être utilisé en combinaison du deuxième matériau. La structuration a conicité négative comprenant un deuxième matériau permet le transport d'une onde électromagnétique de manière contrôlé, c'est-à-dire longitudinalement à la structuration. La structuration est par exemple en ligne droite ou décrivant une courbe ou les deux. Le couplage optique du guide d'onde avec un autre dispositif optique peut se faire sur une des faces latérales du substrat. La structuration à conicité négative, remplie d'un deuxième matériau permet la propagation d'ondes par réflexions multiples (sur les interfaces entre le substrat 11 et le deuxième matériau et sur les surfaces entre le deuxième matériau et l'air) à la manière d'une fibre optique.

Un circuit électrique comprenant un substrat 11 selon le troisième aspect de l'invention est formé en insérant dans la structuration à conicité négative un matériau conducteur. Le matériau conducteur a par exemple un coefficient d'absorption plus important que le coefficient d'absorption du substrat 11 dans la plage de longueur d'onde 200 nm - 2000 nm. Le matériau conducteur est par exemple de l'étain qui possède alors un point de fusion plus bas que celui du substrat 11. Le substrat est un matériau ayant une grande résistance électrique. Le matériau conducteur est par exemple fondu et coulé à l'intérieur de la structuration à conicité négative afin de remplir au moins partiellement la structuration à conicité négative. De préférence le substrat 11 est isolant électriquement, c'est-à-dire qu'il permet d'isoler électriquement des éléments conducteurs d'électricité les uns des autres. Par exemple le matériau conducteur dans un état visqueux est introduit par capillarité. Le substrat 11 est par exemple un matériau transparent de type Poly(téréphtalate d'éthylène) (PET) ou Poly(naphtalate d'éthylène) (PEN) pour ses propriété isolante et de flexibilité mécanique. Un matériau flexible est un matériau qui peut être enroulé autour d'un support cylindrique avec un diamètre minimal de 1 cm. Un matériau flexible peut être utilisé dans un procédé de dépôt rouleau à rouleau en continu. Par exemple le substrat est en bakélite. Par exemple des connexions électriques peuvent être réalisées en apposant un composant à raccorder électriquement en contact avec le matériau conducteur par l'ouverture 4 de la conicité négative et en chauffant localement à l'aide d'un laser de chauffage le matériau conducteur à l'emplacement désiré. Le laser de chauffage est par exemple transmis à travers le substrat transparent. Le matériau conducteur comprend de préférence un métal, de l'étain ou des particules métalliques.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Méthode de structuration d'un substrat (11) ayant une surface supérieure (16) et une surface inférieure, ladite méthode étant **caractérisée par** les étapes
suivantes :
a) fournir un dispositif (100) comprenant :
- une source lumineuse (33) pour générer un faisceau lumineux entrant (1) de structuration apte à usiner ladite surface supérieure (16) dudit substrat (11), les pulses du faisceau lumineux entrant (1) de structuration ont une durée entre 10⁻¹⁴s et 10⁻⁸s ;
- un système optique (2) pour obtenir, à partir dudit faisceau lumineux entrant (1), un faisceau lumineux sortant (7) spatialement décalé par rapport audit faisceau lumineux entrant (1),
ledit système optique (2) étant apte à modifier le décalage spatial entre ledit faisceau lumineux entrant (1) et ledit faisceau lumineux sortant (7) ;
- des moyens de focalisation (9) pour focaliser ledit faisceau lumineux sortant (7), le faisceau lumineux sortant (7) étant décalé par rapport au faisceau lumineux entrant (1) tout en restant parallèle à la direction du faisceau lumineux entrant (1) en amont du moyen de focalisation (9) ;
- un porte substrat (59) ;
- un dispositif de déplacement (60) pour générer un mouvement (41) relatif entre ledit faisceau lumineux sortant (7) et ledit porte substrat (59) ;
b) fournir et poser ledit substrat (11) sur ledit porte substrat (59) de sorte à présenter vers lesdits moyens de focalisation (9) sa surface supérieure (16) **caractérisée par** une normale (106) ;
c) générer avec la source lumineuse (33) le faisceau lumineux entrant (1) ;
d) générer à partir du faisceau lumineux entrant (1) lors de son passage dans le système optique (2), puis au travers des moyens de focalisation (9), un faisceau lumineux sortant (7) focalisé décrivant avec ladite normale (106) de ladite surface supérieure (16) dudit substrat (11) au niveau d'un point de focalisation dudit faisceau lumineux sortant (7) un angle d'attaque (107) supérieur à 1°, de préférence supérieur à 3°, pour tout décalage spatial entre faisceau lumineux sortant (7) et faisceau lumineux entrant (1) imposé par ledit système optique (2) ;
e) initier un mouvement relatif entre ledit porte substrat (59) supportant ledit substrat (11) et ledit faisceau lumineux sortant (7) focalisé afin de graver un motif (17) à partir de la surface supérieure (16) dudit substrat (11), ledit motif (17) formé comprenant une cavité (3) dans le substrat (11) débouchant par une ouverture (4) au niveau de la surface supérieure (16) du substrat (11) ;
définir des paramètres de ladite source lumineuse (33) en fonction dudit mouvement relatif initié à l'étape e) pour générer ledit faisceau lumineux entrant tel que la cavité (3) du motif (17) formé est non-traversante entre ladite surface supérieure (16) et ladite surface inférieure dudit substrat (11), et que la cavité (3) a une forme de rainure avec une profondeur de l'ordre de 10 à 200 µm.

2. Méthode selon la revendication 1, **caractérisée en ce que** le
mouvement relatif entre ledit substrat (11) et ledit faisceau lumineux sortant (7) est un mouvement relatif selon un plan parallèle à la surface supérieure (16), de sorte que le faisceau lumineux sortant (7) focalisé puisse graver un motif (17) à partir de la surface supérieure (16) sur une surface essentiellement plane ayant une aire supérieure à 1 cm², de préférence supérieure à 10 cm² et de façon encore plus préférée supérieure à 100 cm².

3. Méthode selon l'une quelconque des revendications précédentes **caractérisée en ce que** le décalage spatial entre le faisceau lumineux entrant (1) et le faisceau lumineux sortant (7) imposé par le système optique (2) est un décalage spatial fixe par rapport aux moyens de focalisation (9) de sorte à graver un motif ayant une cavité (3) comprenant
- au niveau de son ouverture (4) sur ladite surface supérieure (16) dudit substrat (11), une première (51) et une deuxième (52) extrémités définies dans un plan essentiellement perpendiculaire à ladite surface supérieure (16) du substrat (11),
- une largeur d'ouverture (5) définie par une distance entre ladite première (51) et deuxième (52) extrémités de ladite ouverture (4),
- une largeur de cavité (3) définie essentiellement parallèlement à ladite largeur d'ouverture (5) qui est essentiellement décroissante à partir de la surface supérieure (16) le long de l'épaisseur du substrat (11).

4. Méthode selon l'une quelconque des revendications précédentes **caractérisée en ce que** ledit système optique (2) comprend :
- un miroir (19) :
o ayant une surface de réflexion essentiellement plane définie par une normale (26) pour obtenir un premier faisceau lumineux réfléchi (23) issu d'un premier faisceau lumineux incident (4) provenant dudit faisceau lumineux entrant (1),
o mobile ;
- des moyens d'entraînement (6) pour déplacer ledit miroir (19) mobile ;
- un système de redirection :
∘ positionné par rapport audit miroir (19) pour obtenir à partir dudit premier faisceau lumineux réfléchi (23), un deuxième faisceau lumineux incident (8) audit miroir (19), pour obtenir ledit faisceau lumineux sortant (7) à partir d'une réflexion dudit deuxième faisceau lumineux incident (8) sur ledit miroir (19) mobile.

5. Méthode selon l'une quelconque des revendications 1 à 3 **caractérisée en ce que** ledit système optique (2) comprend :
- un miroir (19) :
∘ ayant une surface de réflexion essentiellement plane définie par une normale (26) pour obtenir un premier faisceau lumineux réfléchi (23) issu d'un premier faisceau lumineux incident (4) provenant dudit faisceau lumineux entrant (1),
∘ mobile tel que sa normale (26) soit apte à décrire une trajectoire dans un espace tridimensionnel ;
ledit système optique (2) étant configuré de sorte que ledit premier faisceau lumineux incident (4) et ladite normale (26) dudit miroir (19) sont séparés par un angle (15) compris entre 0° et 15° pour toutes les positions et orientations possibles dudit miroir (19) mobile, de préférence entre 0,01° et 10° et encore plus préférentiellement entre 3° et 8° ;
- des moyens d'entrainement (6) pour déplacer ledit miroir (19) mobile ;
- un système de rétro-réflexion (21) :
o positionné par rapport audit miroir (19) pour obtenir à partir dudit premier faisceau lumineux réfléchi (23), un deuxième faisceau lumineux incident (8) audit miroir (19) pour toutes les positions et orientations dudit miroir (19), pour obtenir ledit faisceau lumineux sortant (7) à partir d'une réflexion dudit deuxième faisceau lumineux incident (8) sur ledit miroir (19) mobile, et
∘ apte à fournir ledit deuxième faisceau lumineux incident (8) sur ledit miroir (19), parallèle audit premier faisceau lumineux réfléchi (23) pour toutes les positions et orientations possibles dudit miroir (19) mobile.

6. Méthode selon la revendication 5, **caractérisée en ce que** le
système optique (2) est configuré de sorte que le premier faisceau lumineux incident (4) et ladite normale (26) dudit miroir (19) sont séparés par un angle (15) compris entre 0,01° et 10°, pour toutes les positions et orientations possibles dudit miroir mobile (19), préférentiellement entre 0,1° et 8° et encore plus préférentiellement entre 3° et 8°.

7. Méthode selon l'une quelconque des revendications précédentes **caractérisé en ce que** l'angle d'attaque (107) est compris entre 1° et 15°, de préférence compris entre 2° et 5°, de manière encore préférée entre 3° et 4°, pour tout décalage spatial entre faisceau lumineux sortant (7) et faisceau lumineux entrant (1) imposé par ledit système optique (2).

8. Méthode selon l'une quelconque des revendications précédentes **caractérisée en ce que** ledit système optique (2) est apte à induire un mouvement de précession dudit faisceau lumineux sortant (7) focalisé par rapport à la surface supérieure (16) dudit substrat (11).

9. Méthode d'assemblage d'un substrat (11) avec une pièce et comprenant les étapes suivantes :
- structurer une surface supérieure (16) du substrat (11) à l'aide d'une méthode selon l'une quelconque des revendications précédentes, pour générer une première partie de surface supérieure (16) structurée du substrat (11) comprenant un motif (17) ;
- fournir la pièce dont une surface présente une deuxième partie de surface comprenant un matériau fusible ayant un point de fusion plus bas que le point de fusion de la première partie de surface supérieure (16) structurée du substrat (11) ;
- disposer la première partie de surface supérieure (16) structurée du substrat (11) en contact avec la deuxième partie de surface de la pièce ;
- appliquer une pression de façon à maintenir le contact entre la première partie de surface supérieure (16) structurée du substrat (11) et la deuxième partie de surface de la pièce ;
- fournir un dispositif de chauffage pour créer une augmentation de température dans le matériau fusible suffisante pour le faire fondre ; et
- chauffer, grâce au dispositif de chauffage, le matériau fusible de manière à atteindre dans le matériau fusible, une température suffisante pour en faire fondre au moins une partie dans le motif (17) de la première partie de surface supérieure (16) structurée du substrat (11) ;
de préférence, le dispositif de chauffage est un laser apte à produire un faisceau laser capable de chauffer par irradiation la première partie de surface supérieure (16) structurée du substrat (11) et en ce que la pièce est au moins partiellement transparente au faisceau.

10. Ensemble comprenant un substrat (11) ayant une surface supérieure (16) et une surface inférieure et un dispositif (100) pour structurer ledit substrat (11), ledit dispositif (100) comprenant :
- une source lumineuse (33) pour générer un faisceau lumineux entrant (1) de structuration apte à usiner ladite surface supérieure (16) dudit substrat (11), les pulses du faisceau lumineux entrant (1) de structuration ont une durée entre 10⁻¹⁴s et 10⁻⁸s ;
- un système optique (2) pour obtenir, à partir dudit faisceau lumineux entrant (1), un faisceau lumineux sortant (7) spatialement décalé par rapport audit faisceau lumineux entrant (1), ledit système optique (2) étant apte à modifier le décalage spatial entre ledit faisceau lumineux entrant (1) et ledit faisceau lumineux sortant (7), le faisceau lumineux sortant (7) étant décalé par rapport au faisceau lumineux entrant (1) tout en restant parallèle à la direction du faisceau lumineux entrant (1) en amont du moyen de focalisation (9);
- des moyens de focalisation (9) pour focaliser ledit faisceau lumineux sortant (7) ;
- un porte substrat (59) ;
- un dispositif de déplacement (60) pour générer un mouvement (41) relatif entre ledit faisceau lumineux sortant (7) et ledit porte substrat (59) ;
ledit substrat (11) étant posé sur ledit porte substrat (59) de sorte à présenter vers lesdits moyens de focalisation (9) sa surface supérieure (16) **caractérisée par** une normale (106),
ledit dispositif (100) étant configuré de sorte que ledit faisceau lumineux sortant (7) focalisé et ladite normale (106) de ladite surface supérieure (16) dudit substrat (11) au niveau d'un point de focalisation dudit faisceau lumineux sortant (7) sont séparés par un angle d'attaque (107) supérieur à 1°, de préférence supérieur à 3°, pour tout décalage spatial entre faisceau lumineux sortant (7) et faisceau lumineux entrant (1) imposé par ledit système optique (2) des paramètres de ladite source lumineuse (33) sont définis en fonction dudit mouvement relatif pour générer ledit faisceau lumineux entrant tel que la cavité (3) du motif (17) formé est non-traversante entre ladite surface supérieure (16) et ladite surface inférieure dudit substrat (11), et que la cavité (3) a une forme de rainure avec une profondeur de l'ordre de 10 à 200 µm.

11. Ensemble selon la revendication 10,
**caractérisé en ce que** ledit
dispositif de déplacement (60) est apte à générer ledit mouvement relatif entre ledit substrat (11) et ledit faisceau lumineux sortant (7) selon une aire supérieure à 1 cm², de préférence supérieure à 10 cm² et de façon encore plus préférée supérieure à 100 cm², ledit mouvement relatif étant généré selon un plan parallèle à la surface supérieure (16), de sorte que le faisceau lumineux sortant (7) focalisé puisse graver un motif (17) à partir de la surface supérieure (16).

12. Ensemble selon l'une quelconque des revendications 10 à 11,
**caractérisé en ce que** le dispositif (100) est configuré de sorte que ledit faisceau lumineux sortant (7) focalisé et une normale (106) de ladite surface supérieure (16) dudit substrat (11) au niveau d'un point de focalisation dudit faisceau lumineux sortant (7) sont séparés par un angle d'attaque (107) compris entre 1° et 15°, de préférence compris entre 2° et 5°, de manière encore préférée entre 3° et 4°, pour tout décalage spatial entre faisceau lumineux sortant (7) et faisceau lumineux entrant (1) imposé par ledit système optique (2).

13. Ensemble selon l'une quelconque des revendications 10 à 12,
**caractérisé en ce que** ledit système optique (2) comprend :
- un miroir (19) :
∘ ayant une surface de réflexion essentiellement plane définie par une normale (26) pour obtenir un premier faisceau lumineux réfléchi (23) issu d'un premier faisceau lumineux incident (4) provenant dudit faisceau lumineux entrant (1),
∘ mobile;
- des moyens d'entrainement (6) pour déplacer ledit miroir (19) mobile ;
- un système de redirection :
∘ positionné par rapport audit miroir (19) pour obtenir à partir dudit premier faisceau lumineux réfléchi (23), un deuxième faisceau lumineux incident (8) audit miroir (19), pour obtenir ledit faisceau lumineux sortant (7) à partir d'une réflexion dudit deuxième faisceau lumineux incident (8) sur ledit miroir (19) mobile ;
ou,
- un miroir (19) :
∘ ayant une surface de réflexion essentiellement plane définie par une normale (26) pour obtenir un premier faisceau lumineux réfléchi (23) issu d'un premier faisceau lumineux incident (4) provenant dudit faisceau lumineux entrant (1),
∘ mobile tel que sa normale (26) soit apte à décrire une trajectoire dans un espace tridimensionnel ;
ledit système optique (2) étant configuré de sorte que ledit premier faisceau lumineux incident (4) et ladite normale (26) dudit miroir (19) sont séparés par un angle (15) compris entre 0° et 15°, de préférence compris entre 0,01° et 10°, préférentiellement entre 0,1° et 8° et encore plus préférentiellement entre 3° et 8°, pour toutes les positions et orientations possibles dudit miroir (19) mobile ;
- des moyens d'entrainement (6) pour déplacer ledit miroir (19) mobile ;
- un système de rétro-réflexion (21) :
∘ positionné par rapport audit miroir (19) pour obtenir à partir dudit premier faisceau lumineux réfléchi (23), un deuxième faisceau lumineux incident (8) audit miroir (19) pour toutes les positions et orientations dudit miroir (19), pour obtenir ledit faisceau lumineux sortant (7) à partir d'une réflexion dudit deuxième faisceau lumineux incident (8) sur ledit miroir (19) mobile, et
∘ apte à fournir ledit deuxième faisceau lumineux incident (8) sur ledit miroir (19), parallèle audit premier faisceau lumineux réfléchi (23) pour toutes les positions et orientations possibles dudit miroir (19) mobile.

14. Ensemble selon l'une quelconque des revendications 10 à **caractérisé en ce que** le dispositif (100) comprend en outre un système de déflection positionné entre ledit système optique (2) et lesdits moyens de focalisation (9) pour décaler le faisceau lumineux sortant (7).

15. Système pour l'assemblage d'un substrat (11) avec une pièce comprenant un matériau fusible ayant un point de fusion plus bas que le point de fusion dudit substrat (11), ledit système comprenant :
- un ensemble selon l'une quelconque des revendications 10 à 14 pour structurer une surface supérieure (16) dudit substrat (11) ;
- un moyen de mise en contact de ladite pièce (14) avec ladite surface supérieure (16) dudit substrat (11) ;
- un moyen de mise en compression ;
- un dispositif de chauffage capable de créer une augmentation de température suffisante dans ledit matériau fusible pour en faire fondre au moins une partie.

## Patentansprüche

1. Verfahren zur Strukturierung eines Substrats (11), das eine obere Oberfläche (16) und eine untere Oberfläche aufweist, wobei das Verfahren durch die folgenden Schritte gekennzeichnet ist:
a) Bereitstellen einer Vorrichtung (100), umfassend:
- eine Lichtquelle (33) zum Erzeugen eines eintretenden Lichtstrahls (1) zur Strukturierung, der geeignet ist, die obere Oberfläche (16) des Substrats (11) zu bearbeiten, wobei die Impulse des eintretenden Lichtstrahls (1) zur Strukturierung eine Dauer zwischen 10⁻¹⁴s und 10⁻⁸s aufweisen;
- ein optisches System (2), um aus dem eintretenden Lichtstrahl (1) einen austretenden Lichtstrahl (7) zu erhalten, der in Bezug auf den eintretenden Lichtstrahl (1) räumlich versetzt ist, wobei das optische System (2) geeignet ist, den räumlichen Versatz zwischen dem eintretenden Lichtstrahl (1) und dem austretenden Lichtstrahl (7) zu modifizieren;
- Fokussiermittel (9) zum Fokussieren des austretenden Lichtstrahls (7), wobei der austretende Lichtstrahl (7) in Bezug auf den eintretenden Lichtstrahl (1) versetzt ist, jedoch stromaufwärts des Fokussiermittels (9) parallel zur Richtung des eintretenden Lichtstrahls (1) bleibt;
- einen Substrathalter (59);
- eine Verschiebevorrichtung (60) zum Erzeugen einer relativen Bewegung (41) zwischen dem austretenden Lichtstrahl (7) und dem Substrathalter (59);
b) Bereitstellen und Anbringen des Substrats (11) auf dem Substrathalter (59) derart, um seine obere Oberfläche (16), die durch eine Normale (106) gekennzeichnet ist, zu den Fokussiermitteln (9) zu richten;
c) Erzeugen mit der Lichtquelle (33) des eintretenden Lichtstrahls (1);
d) Erzeugen aus dem eintretenden Lichtstrahl (1) bei dessen Durchlauf in dem optischen System (2), und danach durch die Fokussiermittel (9), eines fokussierten austretenden Lichtstrahls (7), der mit der Normalen (106) der oberen Oberfläche (16) des Substrats (11) im Bereich eines Fokussierpunktes des austretenden Lichtstrahls (7) einen Angriffswinkel (107) größer als 1°, vorzugsweise größer als 3°, für jeden räumlichen Versatz zwischen dem austretenden Lichtstrahl (7) und dem eintretenden Lichtstrahl (1) beschreibt, der durch das optische System (2) auferlegt wird;
e) Einleiten einer relativen Bewegung zwischen dem Substrathalter (59), der das Substrat (11) stützt, und dem fokussierten austretenden Lichtstrahl (7), um ein Motiv (17) aus der oberen Oberfläche (16) des Substrats (11) zu gravieren, wobei das gebildete Motiv (17) einen Hohlraum (3) in dem Substrat (11) umfasst, der durch eine Öffnung (4) an der oberen Oberfläche (16) des Substrats (11) mündet;
Definieren Parameter der Lichtquelle (33) in Abhängigkeit von der in Schritt e) eingeleiteten relativen Bewegung, um den eintretenden Lichtstrahl so zu erzeugen, dass der Hohlraum (3) des gebildeten Motivs (17) zwischen der oberen Oberfläche (16) und der unteren Oberfläche des Substrats (11) nicht durchgängig ist, und der Hohlraum (3) eine Nutform mit einer Tiefe in der Größenordnung von 10 bis 200 µm aufweist.

2. Verfahren nach Anspruch 1, **dadurch gekennzeichnet, dass** die relative Bewegung zwischen dem Substrat (11) und dem austretenden Lichtstrahl (7) eine relative Bewegung entlang einer Ebene parallel zur oberen Oberfläche (16) ist, sodass der fokussierte austretende Lichtstrahl (7) ein Motiv (17) aus der oberen Oberfläche (16) auf einer im Wesentlichen ebenen Oberfläche gravieren kann, die eine Fläche von mehr als 1 cm², vorzugsweise mehr als 10 cm² und noch bevorzugter mehr als 100 cm²aufweist.

3. Verfahren nach einem der vorstehenden Ansprüche, **dadurch gekennzeichnet, dass** der räumliche Versatz zwischen dem eintretenden Lichtstrahl (1) und dem austretenden Lichtstrahl (7), der durch das optische System (2) auferlegt wird, ein in Bezug auf Fokussiermittel (9) fester räumlicher Versatz ist, um ein Motiv zu gravieren, das einen Hohlraum (3) aufweist, umfassend:
- an seiner Öffnung (4) auf der oberen Oberfläche (16) des Substrats (11), ein erstes (51) und ein zweites (52) Ende, die auf einer Ebene im Wesentlichen senkrecht zur oberen Oberfläche (16) des Substrats (11) definiert sind,
- eine Öffnungsbreite (5), die durch einen Abstand zwischen dem ersten (51) und zweiten (52) Ende der Öffnung (4) definiert ist,
- eine Hohlraumbreite (3), die im Wesentlichen parallel zur Öffnungsbreite (5) definiert ist, die im Wesentlichen ab der oberen Oberfläche (16) entlang der Dicke des Substrats (11) abnehmend ist.

4. **Verfahren** nach einem der vorstehenden Ansprüche, **dadurch gekennzeichnet, dass** das optische System (2) umfasst:
- einen Spiegel (19):
∘ der eine im Wesentlichen ebene Reflexionsoberfläche aufweist, die durch eine Normale (26) definiert wird, um einen aus einem ersten einfallenden Lichtstrahl (4), der aus dem eintretenden Lichtstrahl (1) kommt, stammenden ersten reflektierten Lichtstrahl (23) zu erhalten,
∘ beweglich;
- Antriebsmittel (6) zum Verschieben des beweglichen Spiegels (19);
- ein Umlenksystem:
das in Bezug auf den Spiegel (19) positioniert ist, um aus dem ersten reflektierten Lichtstrahl (23) einen zweiten, auf den Spiegel (19) einfallenden Lichtstrahl (8) zu erhalten, um den austretenden Lichtstrahl (7) aus einer Reflexion des zweiten, auf den beweglichen Spiegel (19) einfallenden Lichtstrahls (8) zu erhalten.

5. Verfahren nach einem der Ansprüche 1 bis 3, **dadurch gekennzeichnet, dass** das optische System (2) umfasst:
- einen Spiegel (19):
∘ der eine im Wesentlichen ebene Reflexionsoberfläche aufweist, die durch eine Normale (26) definiert wird, um einen aus einem ersten einfallenden Lichtstrahl (4), der aus dem eintretenden Lichtstrahl (1) kommt, stammenden ersten reflektierten Lichtstrahl (23) zu erhalten,
∘ beweglich, sodass seine Normale (26) geeignet ist, einen Bahnverlauf in einem dreidimensionalen Raum zu beschreiben;
wobei das optische System (2) derart konfiguriert ist, dass der erste einfallende Lichtstrahl (4) und die Normale (26) des Spiegels (19) für alle möglichen Positionen und Ausrichtungen des beweglichen Spiegels (19) durch einen Winkel (15) getrennt sind, der zwischen 0° und 15°, vorzugsweise zwischen 0,01° und 10° und noch bevorzugter zwischen 3° und 8° enthalten ist;
- Antriebsmittel (6) zum Verschieben des beweglichen Spiegels (19);
- ein Retroreflexionssystem (21):
∘ das in Bezug auf den Spiegel (19) positioniert ist, um aus dem ersten reflektierten Lichtstrahl (23) einen zweiten, auf den Spiegel (19) einfallenden Lichtstrahl (8) für alle Positionen und Ausrichtungen des Spiegels (19) zu erhalten, um den austretenden Lichtstrahl (7) aus einer Reflexion des zweiten, auf den beweglichen Spiegel (19) einfallenden Lichtstrahls (8) zu erhalten, und
∘ geeignet, den zweiten, auf den Spiegel (19) einfallenden Lichtstrahl (8) parallel zum ersten reflektierten Lichtstrahl (23) für alle möglichen Positionen und Ausrichtungen des beweglichen Spiegels (19) bereitzustellen.

6. Verfahren nach Anspruch 5, **dadurch gekennzeichnet, dass** das optische System (2) derart konfiguriert ist, dass der erste einfallende Lichtstrahl (4) und die Normale (26) des Spiegels (19) für alle möglichen Positionen und Ausrichtungen des beweglichen Spiegels (19) durch einen Winkel (15) getrennt sind, der zwischen 0,01° und 10°, vorzugsweise zwischen 0,1° und 8° und noch bevorzugter zwischen 3° und 8° enthalten ist.

7. Verfahren nach einem der vorstehenden Ansprüche, **dadurch gekennzeichnet, dass** der Angriffswinkel (107) für jeden räumlichen Versatz zwischen dem austretenden Lichtstrahl (7) und dem eintretenden Lichtstrahl (1), der durch das optische System (2) auferlegt wird, zwischen 1° und 15° enthalten ist, vorzugsweise zwischen 2° und 5° enthalten ist, noch bevorzugter zwischen 3° und 4° enthalten ist.

8. Verfahren nach einem der vorstehenden Ansprüche, **dadurch gekennzeichnet, dass** das optische System (2) geeignet ist, eine Präzessionsbewegung des fokussierten austretenden Lichtstrahls (7) in Bezug auf die obere Oberfläche (16) des Substrats (11) zu induzieren.

9. Verfahren zum Zusammensetzen eines Substrats (11) mit einem Bauteil, und die folgenden Schritte umfassend:
- Strukturieren einer oberen Oberfläche (16) des Substrats (11) mithilfe eines Verfahrens nach einem der vorstehenden Ansprüche zum Erzeugen eines ersten strukturierten Teils einer oberen Oberfläche (16) des Substrats (11), ein Motiv (17) umfassend;
- Bereitstellen des Bauteils, von dem eine Oberfläche einen zweiten Teil einer Oberfläche aufweist, der ein schmelzbares Material umfasst, das einen niedrigeren Schmelzpunkt als den Schmelzpunkt des strukturierten ersten Teils einer oberen Oberfläche (16) des Substrats (11) aufweist;
- Anordnen des strukturierten ersten Teils einer oberen Oberfläche (16) des Substrats (11) in Kontakt mit dem zweiten Teil einer Oberfläche des Bauteils;
- Anlegen eines Drucks, um den Kontakt zwischen dem strukturierten ersten Teil einer oberen Oberfläche (16) des Substrats (11) und dem zweiten Teil einer Oberfläche des Bauteils aufrecht zu erhalten;
- Bereitstellen einer Heizvorrichtung zur Schaffung einer Temperaturerhöhung in dem schmelzbaren Material, die ausreichend ist, um es zum Schmelzen zu bringen; und
- Erwärmen, dank der Heizvorrichtung, des schmelzbaren Materials, um in dem schmelzbaren Material eine Temperatur zu erreichen, die ausreichend ist, um mindestens einen Teil davon in dem Motiv (17) des strukturierten ersten Teils einer oberen Oberfläche (16) des Substrats (11) zum Schmelzen zu bringen;
wobei die Heizvorrichtung vorzugsweise ein Laser ist, der geeignet ist, einen Laserstrahl zu erzeugen, der in der Lage ist, durch Bestrahlen den strukturierten ersten Teil einer oberen Oberfläche (16) des Substrats (11) zu erwärmen, und dadurch, dass das Bauteil mindestens teilweise für den Strahl transparent ist.

10. Anordnung, umfassend ein Substrat (11), das eine obere Oberfläche (16) und eine untere Oberfläche aufweist, und eine Vorrichtung (100) zum Strukturieren des Substrats (11), wobei die Vorrichtung (100) umfasst:
- eine Lichtquelle (33) zum Erzeugen eines eintretenden Lichtstrahls (1) zur Strukturierung, der geeignet ist, die obere Oberfläche (16) des Substrats (11) zu bearbeiten, wobei die Impulse des eintretenden Lichtstrahls (1) zur Strukturierung eine Dauer zwischen 10⁻¹⁴s und 10⁻⁸s aufweisen;
- ein optisches System (2), um aus dem eintretenden Lichtstrahl (1) einen austretenden Lichtstrahl (7) zu erhalten, der in Bezug auf den eintretenden Lichtstrahl (1) räumlich versetzt ist, wobei das optische System (2) geeignet ist, den räumlichen Versatz zwischen dem eintretenden Lichtstrahl (1) und dem austretenden Lichtstrahl (7) zu modifizieren, wobei der austretende Lichtstrahl (7) in Bezug auf den eintretenden Lichtstrahl (1) versetzt ist, jedoch stromaufwärts des Fokussiermittels (9) parallel zur Richtung des eintretenden Lichtstrahls (1) bleibt;
- Fokussiermittel (9) zum Fokussieren des austretenden Lichtstrahls (7);
- einen Substrathalter (59);
- eine Verschiebevorrichtung (60) zum Erzeugen einer relativen Bewegung (41) zwischen dem austretenden Lichtstrahl (7) und dem Substrathalter (59); wobei das Substrat (11) derart auf den Substrathalter (59) gesetzt ist, um seine obere Oberfläche (16), die durch eine Normale (106) gekennzeichnet ist, zu den Fokussiermitteln (9) zu richten, wobei die Vorrichtung (100) derart konfiguriert ist, dass der fokussierte austretende Lichtstrahl (7) und die Normale (106) der oberen Oberfläche (16) des Substrats (11) an einem Fokussierpunkte des austretenden Lichtstrahls (7) durch einen Angriffswinkel (107) größer als 1°, vorzugsweise größer als 3°, für jeden räumlichen Versatz zwischen dem austretenden Lichtrahl (7) und dem eintretenden Lichtstrahl (1), der durch das optische System (2) auferlegt wird, getrennt sind,
Parameter der Lichtquelle (33) in Abhängigkeit von der relativen Bewegung definiert sind, um den eintretenden Lichtstrahl zu erzeugen, sodass der Hohlraum (3) des gebildeten Motivs (17) zwischen der oberen Oberfläche (16) und der unteren Oberfläche des Substrats (11) nicht durchgängig ist, und der Hohlraum (3) eine Nutform mit einer Tiefe in der Größenordnung von 10 bis 200 µm aufweist.

11. Anordnung nach Anspruch 10, **dadurch gekennzeichnet, dass** die Verschiebevorrichtung (60) geeignet ist, die relative Bewegung zwischen dem Substrat (11) und dem austretenden Lichtstrahl (7) entlang einer Fläche von mehr als 1 cm², vorzugsweise mehr als 10 cm² und noch bevorzugter mehr als 100 cm² zu erzeugen, wobei die relative Bewegung entlang einer Ebene parallel zur oberen Oberfläche (16) derart erzeugt wird, dass der fokussierte austretende Lichtstrahl (7) ein Motiv (17) aus der oberen Oberfläche (16) gravieren kann.

12. Anordnung nach einem der Ansprüche 10 bis 11, **dadurch gekennzeichnet, dass** die Vorrichtung (10) derart konfiguriert ist, dass der fokussierte austretende Lichtstrahl (7) und eine Normale (106) der oberen Oberfläche (16) des Substrats (11) an einem Fokussierpunkte des austretenden Lichtstrahl (7) durch einen Angriffswinkel (107) getrennt sind, der für jeden räumlichen Versatz zwischen dem austretenden Lichtstrahl (7) und dem eintretenden Lichtstrahl (1), der durch das optische System (2) auferlegt wird, zwischen 1° und 15° enthalten ist, vorzugsweise zwischen 2° und 5°, und besonders bevorzugt zwischen 3° und 4° enthalten ist.

13. Anordnung nach einem der Ansprüche 10 bis 12, **dadurch gekennzeichnet, dass** das optische System (2) umfasst:
- einen Spiegel (19):
∘ der eine im Wesentlichen ebene Reflexionsoberfläche aufweist, die durch eine Normale (26) definiert wird, um einen aus einem ersten einfallenden Lichtstrahl (4), der aus dem eintretenden Lichtstrahl (1) kommt, stammenden ersten reflektierten Lichtstrahl (23) zu erhalten,
∘ beweglich;
- Antriebsmittel (6) zum Verschieben des beweglichen Spiegels (19);
- ein Umlenksystem:
o das in Bezug auf den Spiegel (19) positioniert ist, um aus dem ersten reflektierten Lichtstrahl (23) einen zweiten, auf den Spiegel (19) einfallenden Lichtstrahl (8) zu erhalten, um den austretenden Lichtstrahl (7) aus einer Reflexion des zweiten, auf den beweglichen Spiegel (19) einfallenden Lichtstrahls (8) zu erhalten;
oder,
- einen Spiegel (19):
o der eine im Wesentlichen ebene Reflexionsoberfläche aufweist, die durch eine Normale (26) definiert wird, um einen aus einem ersten einfallenden Lichtstrahl (4), der aus dem eintretenden Lichtstrahl (1) kommt, stammenden ersten reflektierten Lichtstrahl (23) zu erhalten,
∘ beweglich, sodass seine Normale (26) geeignet ist, einen Bahnverlauf in einem dreidimensionalen Raum zu beschreiben;
wobei das optische System (2) derart konfiguriert ist, dass der erste einfallende Lichtstrahl (4) und die Normale (26) des Spiegels (19) für alle möglichen Positionen und Ausrichtungen des beweglichen Spiegels (19) durch einen Winkel (15) getrennt sind, der zwischen 0° und 15°, vorzugsweise zwischen 0,01° und 10°, vorzugsweise zwischen 0,1° und 8°, und noch bevorzugter zwischen 3° und 8° enthalten ist;
- Antriebsmittel (6) zum Verschieben des beweglichen Spiegels (19);
- ein Retroreflexionssystem (21):
∘ das in Bezug auf den Spiegel (19) positioniert ist, um aus dem ersten reflektierten Lichtstrahl (23) einen zweiten, auf den Spiegel (19) einfallenden Lichtstrahl (8) für alle Positionen und Ausrichtungen des Spiegels (19) zu erhalten, um den austretenden Lichtstrahl (7) aus einer Reflexion des zweiten, auf den beweglichen Spiegel (19) einfallenden Lichtstrahls (8) zu erhalten, und
∘ geeignet, den zweiten, auf den Spiegel (19) einfallenden Lichtstrahl (8) parallel zum ersten reflektierten Lichtstrahl (23) für alle möglichen Positionen und Ausrichtungen des beweglichen Spiegels (19) bereitzustellen.

14. Anordnung nach einem der Ansprüche 10 bis 13, **dadurch gekennzeichnet, dass** die Vorrichtung (100) weiter ein Umlenksystem umfasst, das zwischen dem optischen System (2) und den Fokussiermitteln (9) positioniert ist, um den austretenden Lichtstrahl (7) zu versetzen.

15. System zum Zusammensetzen eines Substrats (11) mit einem Bauteil, umfassend ein schmelzbares Material, das einen niedrigeren Schmelzpunkt als den Schmelzpunkt des Substrats (11) aufweist, wobei das System umfasst:
- eine Anordnung nach einem der Ansprüche 10 bis 14 zum Strukturieren einer oberen Oberfläche (16) des Substrats (11);
- ein Mittel zum Kontaktieren des Bauteils (14) mit der oberen Oberfläche (16) des Substrats (11);
- ein Kompressionsmittel;
- eine Heizvorrichtung, die in der Lage ist, eine ausreichende Temperaturerhöhung in dem schmelzbaren Material zu schaffen, um mindestens einen Teil davon zum Schmelzen zu bringen.

## Claims

1. . Method for structuring a substrate (11) having an upper surface (16) and a lower surface, said method being **characterised by** the following steps:
a) providing a device (100) comprising:
- a light source (33) for generating a structuring incoming light beam (1) capable of machining said upper surface (16) of said substrate (11), the pulses of the structuring incoming light beam (1) having a duration between 10⁻¹⁴s and 10⁻⁸s;
- an optical system (2) for obtaining, from said incoming light beam (1), an outgoing light beam (7) spatially offset in relation to said incoming light beam (1),
said optical system (2) being capable of modifying the spatial offset between said incoming light beam (1) and said outgoing light beam (7);
- focusing means (9) for focusing said outgoing light beam (7), the outgoing light beam (7) being spatially offset in relation to the incoming light beam (1) while remaining parallel to the direction of the incoming light beam (1) upstream of the focusing means (9);
- a substrate holder (59);
- a movement device (60) for generating a relative movement (41) between said outgoing light beam (7) and said substrate holder (59);
b) providing and placing said substrate (11) on said substrate holder (59) so as to have towards said focusing means (9) its upper surface (16) **characterised by** a normal (106);
c) generating with the light source (33) the incoming light beam (1);
d) generating from the incoming light beam (1) as it passes through the optical system (2), then through the focusing means (9), a focused outgoing light beam (7) describing with said normal (106) of said upper surface (16) of said substrate (11) at a focusing point of said outgoing light beam (7) an angle of attack (107) greater than 1°, preferably greater than 3°, for any spatial offset between outgoing light beam (7) and incoming light beam (1) imposed by said optical system (2);
e) initiating a relative movement between said substrate holder (59) supporting said substrate (11) and said focused outgoing light beam (7) for etching a pattern (17) from the upper surface (16) of said substrate (11), said formed pattern (17) comprising a cavity (3) in the substrate (11) opening through an opening (4) at the upper surface (16) of the substrate (11);
defining parameters of said light source (33) according to said relative movement initiated in step e) for generating said incoming light beam such that the cavity (3) of the formed pattern (7) is non-through between said upper surface (16) and said lower surface of said substrate (11), the cavity (3) having a shape of a groove with a depth in the range of 10 to 200 µm.

2. . Method according to claim 1, **characterised in that** the relative movement between said substrate (11) and said outgoing light beam (7) is a relative movement in a plan parallel to the upper surface (16), so that the focused outgoing light beam (7) can etch a pattern (17) from the upper surface (16) on an essentially flat surface having an area greater than 1 cm², preferably greater than 10 cm², and even more preferably greater than 100 cm².

3. . Method according to any of the preceding claims, **characterised in that** the spatial offset between the incoming light beam (1) and the outgoing light beam (7) imposed by the optical system (2) is a fixed spatial offset with respect to the focusing means (9) so as to etch a pattern having a cavity (3) comprising:
- at its opening (4) on said upper surface (16) of said substrate (11), a first (51) and a second (52) ends defined in a plan essentially perpendicular to said upper surface (16) of the substrate (11),
- an opening width (5) defined by a distance between said first (51) and second (52) ends of said opening (4),
- a cavity width (3) defined essentially parallel to said opening width (5) which is essentially decreasing from the upper surface (16) along the thickness of the substrate (11).

4. . Method according to any of the preceding claims, **characterised in that** said optical system (2) comprises:
- a mirror (19):
having an essentially flat reflection surface defined by a normal (26) for obtaining a first reflected light beam (23) from a first incident light beam (4) from said incoming light beam (1),
movable;
- drive means (6) for moving said movable mirror (19);
- a redirection system:
positioned in relation to said mirror (19) for obtaining from said first reflected light beam (23) a second incident light beam (8) to said mirror (19), for obtaining said outgoing light beam (7) from a reflection of said second incident light beam (8) on said movable mirror (19).

5. . Method according to any of claims 1 to 3, **characterised in that** said optical system (2) comprises:
- a mirror (19):
∘ having an essentially flat reflection surface defined by a normal (26) for obtaining a first reflected light beam (23) from a first incident light beam (4) from said incoming light beam (1),
∘ movable such that its normal (26) is capable of describing a trajectory in a three-dimensional space;
- said optical system (2) being configured so that said first incident light beam (4) and said normal (26) of said mirror (19) are separated by an angle (15) of between 0° and 15° for all possible positions and orientations of said movable mirror (19), preferably between 0,01° and 10° and even more preferably between 3° and 8°;
- drive means (6) for moving said movable mirror (19);
- a retro-reflection system (21):
∘ positioned in relation to said mirror (19) for obtaining from said first reflected light beam (23) a second incident light beam (8) to said mirror (19) for all positions and orientations of said mirror (19) for obtaining said outgoing light beam (7) from a reflection of said second incident light beam (8) on said movable mirror (19), and
∘ capable of providing said second incident light beam (8) on said mirror (19), parallel to said first reflected light beam (23) for all possible positions and orientations of said movable mirror (19).

6. . Method according to claim 5, **characterised in that** the optical system (2) is configured so that said first incident light beam (4) and said normal (26) of said mirror (19) are separated by an angle (15) of between 0,01° and 10° for all possible positions and orientations of said movable mirror (19), preferably between 0,1° and 8° and even more preferably between 3° and 8°.

7. . Method according to any of the preceding claims, **characterised in that** the angle of attack (107) is between 1° and 15°, preferably between 2° and 5°, more preferably between 3° and 4°, for any spatial offset between the outgoing light beam (7) and the incoming light beam (1) imposed by said optical system (2).

8. . Method according to any of the preceding claims, **characterised in that** said optical system (2) is capable of inducing a precession movement of said focused outgoing light beam (7) in relation to the upper surface (16) of said substrate (11).

9. . Method of assembling a substrate (11) with a piece and comprising the following steps:
- structuring an upper surface (16) of the substrate (11) using a method according to any of the preceding claims, for generating a first part of structured upper surface (16) of the substrate (11) comprising a pattern (17);
- providing the piece which have a surface having a second surface part comprising a fusible material having a melting point lower than the melting point of the first part of structured upper surface (16) of the substrate (11);
- placing the first part of structured upper surface (16) of the substrate (11) in contact with the second part of surface of the piece;
- applying a pressure to maintain contact between the first part of structured upper surface (16) of the substrate (11) and the second part of surface of the piece;
- providing a heater for creating a temperature increase in the fusible material sufficient to melt it; and
- heating, by means of the heater, the fusible material so as to reach a temperature in the fusible material sufficient to melt at least a part of it in the pattern (17) of the first part of structured upper surface (16) of the substrate (11),
preferably the heater is a laser capable of producing a laser beam capable of heating by irradiation the first part of structured upper surface (16) of the substrate (11) and in that the piece is at least partially transparent to the beam.

10. . Assemblage comprising a substrate (11) having an upper surface (16) and a lower surface and a device (100) for structuring said substrate (11), said device (100) comprising:
- a light source (23) for generating a structuring incoming light beam (1) capable of machining said upper surface (16) of said substrate (11), the pulses of the structuring incoming light beam (1) having a duration between 10⁻¹⁴s and 10⁻⁸s;
- an optical system (2) for obtaining, from said incoming light beam (1), an outgoing light beam (7) spatially offset in relation to said incoming light beam (1), said optical system (2) being capable of modifying the spatial offset between said incoming light beam (1) and said outgoing light beam (7), the outgoing light beam (7) being spatially offset in relation to the incoming light beam (1) while remaining parallel to the direction of the incoming light beam (1) upstream of the focusing means (9);
- focusing means (9) for focusing said outgoing light beam (7);
- a substrate holder (59);
- a movement device (60) for generating a relative movement (41) between said outgoing light beam(7) and said substrate holder (59);
said substrate (11) being placed on said substrate holder (59) so as to have towards said focusing means (9) its upper surface (16) **characterized by** a normal (106),
said device (100) being configured so that said focused outgoing light beam (7) and said normal (106) of said upper surface (16) of said substrate (11) at a focusing point of said outgoing light beam (7) are separated by an angle of attack (107) greater than 1°, preferably greater than 3°, for any spatial offset between the outgoing light beam (7) and the incoming light beam (1) imposed by said optical system (2)
parameters of said light source (33) are defined according to said relative movement for generating said incoming light beam such that the cavity (3) of the formed pattern (17) is non-through between said upper surface (16) and said lower surface of said substrate (11), and that the cavity (3) having a shape of a groove with a depth in the range of 10 to 200 µm.

11. . Assemblage according to claim 10, **characterised in that** said movement device (60) is capable of generating said relative movement between said substrate (11) and said outgoing light beam (7) in an area greater than 1 cm² , preferably greater than 10 cm² and even more preferably greater than 100 cm² , said relative movement being generated in a plan parallel to the upper surface (16), so that the focused outgoing light beam (7) can etch a pattern (17) from the upper surface (16).

12. . Assemblage according to any of claims 10 to 11, **characterised in that** the device (100) is configured so that said focused outgoing light beam (7) and a normal (106) of said upper surface (16) of said substrate (11) at a focusing point of said outgoing light beam (7) are separated by an angle of attack (107) between 1° and 15°, preferably between 2° and 5°, and even more preferably between 3° and 4°, for any spatial offset between the outgoing light beam (7) and the incoming light beam (1) imposed by said optical system (2).

13. . Assemblage according to any of claims 10 to 12, **characterised in that** said optical system (2) comprises:
- a mirror (19):
∘ having an essentially flat reflection surface defined by a normal (26) for obtaining a first reflected light beam (23) from a first incident light beam (4) from said incoming light beam (1),
movable;
- drive means (6) for moving said movable mirror (19);
- a redirection system:
∘ positioned in relation to said mirror (19) for obtaining from said first reflected light beam (23) a second incident light beam (8) to said mirror (19), for obtaining said outgoing light beam (7) from a reflection of said second incident light beam (8) on said movable mirror (19),
or,
- a mirror (19):
∘ having an essentially flat reflection surface defined by a normal (26) for obtaining a first reflected light beam (23) from a first incident light beam (4) from said incoming light beam (1),
∘ movable such that its normal (26) is capable of describing a trajectory in a three-dimensional space;
- said optical system (2) being configured so that said first incident light beam (4) and said normal (26) of said mirror (19) are separated by an angle (15) of between 0° and 15°, preferably between 0,01° and 10°, preferably between 0,01° and 8° and even more preferably between 3° and 8°, for all possible positions and orientations of said movable mirror (19);
- drive means (6) for moving said movable mirror (19);
- a retro-reflection system (21):
∘ positioned in relation to said mirror (19) for obtaining from said first reflected light beam (23), a second incident light beam (8) to said mirror (19) for all positions and orientations of said mirror (19) for obtaining said outgoing light beam (7) from a reflection of said second incident light beam (8) on said movable mirror (19), and
∘ capable of providing said second incident light beam (8) on said mirror (19), parallel to said first reflected light beam (23) for all possible positions and orientations of said movable mirror (19).

14. . Assemblage according to any of claims 10 to 13, **characterised in that** the device (100) further comprises a deflection system positioned between said optical system (2) and said focusing means (9) to offset the outgoing light beam (7).

15. . System for assembling a substrate (11) with a piece comprising a fusible material having a melting point lower than the melting point of said substrate (11), said system comprising:
- an assemblage according to any of claims 10 to 14 for structuring an upper surface (16) of said substrate (11);
- means for contacting said piece (14) with said upper surface (16) of said substrate (11);
- a means of compression;
- a heater capable of creating a sufficient temperature increase in said fusible material for melting at least a part of it.
